# EUROPEAN PATENT SPECIFICATION

(11) **EP 4 184 367 B1**
(45) Date of publication and mention of the grant of the patent: **26.03.2025**
(21) Application number: 21853166.3
(22) Date of filing: 04.06.2021
(51) Int. Cl.: G06F 21/64, G06F 21/57, H04L 9/40

(54) **INTEGRITY MEASUREMENT METHOD AND INTEGRITY MEASUREMENT DEVICE**
INTEGRITÄTSMESSVERFAHREN UND INTEGRITÄTSMESSVORRICHTUNG
PROCÉDÉ DE MESURE D'INTÉGRITÉ ET DISPOSITIF DE MESURE D'INTÉGRITÉ

(30) Priority: 04.08.2020 CN 202010772453
(43) Date of publication of application: 24.05.2023
(73) Proprietor: Huawei Technologies Co., Ltd., Shenzhen, Guangdong 518129 (CN)
(72) Inventor: SHAO, Xulong, Shenzhen, Guangdong 518129 (CN); LUO, Guangrui, Shenzhen, Guangdong 518129 (CN); OUYANG, Wenbin, Shenzhen, Guangdong 518129 (CN)
(74) Representative: Isarpatent
(86) International application number: PCT/CN2021/098477
(87) International publication number: WO 2022/028081

(56) References cited:
- CN-A- 101 650 764
- CN-A- 101 650 764
- CN-A- 110 263 545
- CN-A- 111 124 664
- CN-A- 111 124 664
- US-A1- 2018 365 422
- ZHAO SHAOHUANG, GUO YUDONG, WANG WEI, LIN JIAN: "Trusted Measurement Method Based on Local Verification", XINXI-GONGCHENG-DAXUE-XUEBAO / JOURNAL OF INFORMATION ENGINEERING UNIVERSITY, vol. 18, no. 3, 30 June 2017 (2017-06-30), pages 364 - 369, XP055895340, ISSN: 1671-0673, DOI: 10.3969/j.issn.1671-0673.2017.03.021

## Description

### TECHNICAL FIELD

This application relates to the field of network security, and in particular, to an integrity measurement method, an integrity measurement apparatus, and a computer-readable storage medium.

### BACKGROUND

With continuous development of internet technologies, network security technologies also have been rapidly developed. In recent years, an object subject to a malicious network attack has gradually been transferred from an executable file in a system of a terminal device to a running process in a memory, and this malicious attack on the memory has strong concealment. Therefore, how to accurately verify integrity of a memory has become one of current problems to be urgently resolved.

In the conventional technology, a dynamic integrity measurement (DIM) method is usually used to verify integrity of a memory. The DIM method is to perform integrity measurement on a part (such as a kernel code segment, a kernel module code segment, or a user-mode process code segment) that does not change in a memory image, and then determine, based on an obtained measurement result, whether the memory image is tampered with, to determine whether a memory is maliciously attacked. However, an existing DIM process does not establish a complete trust chain, and security of a measurement module that performs the DIM method cannot be ensured. Consequently, feasibility of the measurement result of the DIM method is relatively low. Therefore, how to improve accuracy and credibility of integrity measurement has become one of problems to be urgently resolved.
CN 101 650 764 A discloses a creditable calculation password platform and a realization method thereof, belonging to the technical field of computer safety.

### SUMMARY

To resolve the foregoing problem, this application provides an integrity measurement method, an integrity measurement apparatus, and a computer-readable storage medium, as defined in the appended set of claims, to improve accuracy and credibility of integrity measurement.

According to a first aspect, an embodiment of this application provides an integrity measurement method. A first measurement module may perform integrity measurement on a second measurement module to obtain a first measurement result. Herein, credibility of the first measurement module is higher than credibility of the second measurement module. The second measurement module performs integrity measurement on a to-be-measured object to obtain a second measurement result, and sends the second measurement result to the first measurement module. Then, the first measurement module sends measurement result information to an attestation module. Herein, the measurement result information is determined based on the first measurement result and the second measurement result. The attestation module determines, based on the measurement result information, whether the to-be-measured object passes integrity verification. The measurement result information comprises the first measurement result and the second measurement result. If the attestation module determines that the first measurement result is the same as a first baseline value corresponding to the second measurement module, and the second measurement result is the same as a second baseline value corresponding to the to-be-measured object, then it determines that the to-be-measured object passes integrity verification. If the attestation module determines that the first measurement result is different from a first baseline value, or determines that the second measurement result is different from a second baseline value, then it determines that the to-be-measured object fails integrity verification.

In this embodiment of this application, the first measurement module obtains the first measurement result corresponding to the second measurement module and the second measurement result corresponding to the to-be-measured object, and sends the measurement result information determined based on the first measurement result and the second measurement result to the attestation module, so that the attestation module determines, based on the measurement result information, whether the to-be-measured object passes integrity verification. In an entire measurement process, the first measurement module with relatively high credibility is used as a measurement root to obtain integrity measurement results of the second measurement module and the to-be-measured object, and the results are provided to the attestation module, thereby constructing a complete trust chain, and improving accuracy and credibility of the integrity measurement.

With reference to the first aspect, in a feasible implementation, the first measurement module may determine the first measurement result and the second measurement result as measurement result information. Then, the first measurement module sends the measurement result information to the attestation module. The first measurement module directly determines the first measurement result and the second measurement result as the measurement result information, and sends the measurement result information to the second measurement module. This method is simple and easy to implement, and can improve efficiency of the integrity measurement.

With reference to the first aspect, in a feasible implementation, the first measurement module may separately send the first measurement result and the measurement result to a trusted platform module (trusted platform module, TPM). The TPM may separately perform platform configuration register (platform configuration register, PCR) extension on the first measurement result and the second measurement result to obtain a first PCR value and a second PCR value that are corresponding to the first measurement result. The TPM determines the first PCR value and the second PCR value as measurement result information, and sends the measurement result information to the attestation module. In this implementation, the first measurement module first extends measurement results to corresponding PCR values by using a TPM with relatively high security and credibility, and then sends, by using the TPM, the PCR values that are obtained through extension and that are used as measurement result information to the attestation module. This can effectively prevent occurrence of a case such as tampering of a measurement result, and ensure security for transmission of the measurement result.

With reference to the first aspect, in a feasible implementation, the second measurement module includes a first measurement submodule and a second measurement submodule. The first measurement result includes a first measurement sub-result and a second measurement sub-result. The first measurement module performs integrity measurement on the first measurement submodule to obtain a first measurement sub-result. The first measurement submodule performs integrity measurement on the second measurement submodule to obtain a second measurement sub-result, and sends the second measurement result to the first measurement module.

With reference to the first aspect, in a feasible implementation, the first measurement module determines the first measurement sub-result, the second measurement sub-result, and the second measurement result as measurement result information. The first measurement module sends the measurement result information to the attestation module.

With reference to the first aspect, in a feasible implementation, the first measurement module separately sends the first measurement sub-result, the second measurement sub-result, and the second measurement result to the TPM. The TPM separately performs PCR extension on the first measurement sub-result, the second measurement sub-result, and the second measurement result, to obtain a first sub-PCR value corresponding to the first measurement sub-result, a second sub-PCR value corresponding to the second measurement sub-result, and a second PCR value corresponding to the second measurement result. The TPM determines the first sub-PCR value, the second sub-PCR value, and the second PCR value as measurement result information, and sends the measurement result information to the attestation module.

With reference to the first aspect, in a feasible implementation, before the performing, by the first measurement module, integrity measurement on the second measurement module to obtain a first measurement result, the first measurement module may further determine that a preset measurement trigger condition is met. Herein, the measurement trigger condition is at least one of the following: a preset measurement period arrives, a preset system exception event occurs, and a measurement trigger instruction from a user is received. Herein, different measurement trigger conditions are set to trigger the first measurement module to actively start integrity measurement on the to-be-measured object, thereby reducing an attack time window of the to-be-measured object and improving security of the to-be-measured object.

With reference to the first aspect, in a feasible implementation, when the measurement trigger condition is that a preset system exception event occurs, if the first measurement module receives a system exception message sent by an intrusion detection system (intrusion detection system, IDS), it is determined that a preset trigger condition is met. Herein, the system exception message is sent by the IDS when the IDS detects that the system exception event occurs. Herein, the IDS detects whether a system exception event occurs, to reduce a data processing amount of the first measurement module.

With reference to the first aspect, in a feasible implementation, when determining that a preset measurement trigger condition is met, the first measurement module may further send first measurement indication information to the second measurement module, where the first measurement indication information is used to indicate, to the second measurement module, that the first measurement module is to perform integrity measurement on the second measurement module.

According to is the first aspect, the attestation module receives measurement result information sent by a first measurement module. The measurement result information is determined based on a first measurement result and a second measurement result. The first measurement result is a result obtained by the first measurement module performing integrity measurement on the second measurement module. The second measurement result is a result obtained by the second measurement module performing integrity measurement on a to-be-measured object. Credibility of the first measurement module is higher than credibility of the second measurement module. The attestation module determines, based on the measurement result information, whether the to-be-measured object passes integrity verification. Herein, the attestation module determines, with reference to the first measurement result and the second measurement result, whether the to-be-measured object passes integrity verification. This can avoid occurrence of a case in which credibility of a measurement result that is of the to-be-measured object and that is brought by unknown security of the second measurement module is low, improve credibility of the integrity measurement result, and improve precision and credibility of the integrity measurement method.

With reference to the first aspect, in a first feasible implementation, the measurement result information includes the first measurement result and the second measurement result. If the attestation module determines that the first measurement result is the same as a first baseline value corresponding to the second measurement module, and the second measurement result is the same as a second baseline value corresponding to the to-be-measured object, it is determined that the to-be-measured object passes integrity verification. If the attestation module determines that the first measurement result is different from the first baseline value, or determines that the second measurement result is different from the second baseline value, it is determined that the to-be-measured object fails integrity verification.

According to the first aspect, an embodiment of this application provides an integrity measurement method. When it is determined that a first measurement module performs integrity measurement on a second measurement module, the second measurement module performs integrity measurement on a to-be-measured object to obtain a second measurement result. Credibility of the first measurement module is higher than credibility of the second measurement module. The second measurement module sends the second measurement result to the first measurement module.

With reference to the first aspect, in a feasible implementation, if the second measurement module receives first measurement indication information, it may be determined that the first measurement module performs integrity measurement on the second measurement module.

According to a second aspect, an embodiment of this application provides an integrity measurement apparatus, and the integrity measurement apparatus comprises the foregoing first measurement module and the foregoing attestation module. The integrity measurement apparatus may include:
a processor unit, configured to perform integrity measurement on a second measurement module to obtain a first measurement result, where credibility of the first measurement module is higher than credibility of the second measurement module; and
a transceiver unit, configured to receive a second measurement result sent by the second measurement module, where the second measurement result is obtained by the second measurement module performing integrity measurement on a to-be-measured object.

The processing unit is further configured to determine measurement result information based on the first measurement result and the second measurement result.

The transceiver unit is further configured to send the measurement result information to an attestation module. The attestation module is configured to determine, based on the measurement result information, whether the to-be-measured object passes integrity verification.

With reference to the second aspect, in a feasible implementation, the processing unit may determine the first measurement result and the second measurement result as the measurement result information. Then, the transceiver unit may send the measurement result information to the attestation module.

With reference to the second aspect, in a feasible implementation, the transceiver unit may separately send the first measurement result and the second measurement result to a TPM. The TPM may separately perform platform configuration register PCR extension on the first measurement result and the second measurement result to obtain a first PCR value and a second PCR value that are corresponding to the first measurement result. The TPM may further determine the first PCR value and the second PCR value as the measurement result information and send the measurement result information to the attestation module.

With reference to the second aspect, in a feasible implementation, the second measurement module includes a first measurement submodule and a second measurement submodule. The first measurement result includes a first measurement sub-result and a second measurement sub-result. The processing unit is configured to perform integrity measurement on the first measurement submodule to obtain a first measurement sub-result. The first measurement submodule performs integrity measurement on the second measurement submodule to obtain a second measurement sub-result, and sends the second measurement sun-result to the transceiver unit.

With reference to the second aspect, in a feasible implementation, the processing unit is configured to determine the first measurement sub-result, the second measurement sub-result, and the second measurement result as the measurement result information. The first measurement module sends the measurement result information to the attestation module.

With reference to the second aspect, in a feasible implementation, the transceiver unit may separately send the first measurement sub-result, the second measurement sub-result, and the second measurement result to a TPM. The TPM separately performs PCR extension on the first measurement sub-result, the second measurement sub-result, and the second measurement result, to obtain a first sub-PCR value corresponding to the first measurement sub-result, a second sub-PCR value corresponding to the second measurement sub-result, and a second PCR value corresponding to the second measurement result. The TPM determines the first sub-PCR value, the second sub-PCR value, and the second PCR value as measurement result information, and sends the measurement result information to the attestation module.

With reference to the second aspect, in a feasible implementation, before the performing, by the first measurement module, integrity measurement on the second measurement module to obtain a first measurement result, the processing unit may further determine that a preset measurement trigger condition is met. Herein, the measurement trigger condition is at least one of the following: a preset measurement period arrives, a preset system exception event occurs, and a measurement trigger instruction from a user is received.

With reference to the second aspect, in a feasible implementation, when the measurement trigger condition is that a preset system exception event occurs, if the processing unit determines that a system exception message sent by an IDS is received, it is determined that a preset trigger condition is met. Herein, the system exception message is sent by the IDS when the IDS detects that the system exception event occurs.

With reference to the second aspect, in a feasible implementation, when the processing unit determines that a preset measurement trigger condition is met, the transceiver unit may further send first measurement indication information to the second measurement module. The first measurement indication information is used to indicate, to the second measurement module, that the first measurement module is to perform integrity measurement on the second measurement module.

According to the second aspect, the apparatus comprises the foregoing attestation module. The integrity measurement apparatus may include:
a transceiver unit, where the transceiver unit is configured to receive measurement result information sent by a first measurement module, the measurement result information is determined based on a first measurement result and a second measurement result, the first measurement result is a result obtained by the first measurement module performing integrity measurement on the second measurement module, the second measurement result is a result obtained by the second measurement module performing integrity measurement on a to-be-measured object, and credibility of the first measurement module is higher than credibility of the second measurement module; and
a processing unit, configured to determine, based on the measurement result information, whether the to-be-measured object passes integrity verification.

With reference to the second aspect, in a feasible implementation, the measurement result information includes the first measurement result and the second measurement result. If the processing unit determines that the first measurement result is the same as a first baseline value corresponding to the second measurement module, and the second measurement result is the same as a second baseline value corresponding to the to-be-measured object, it is determined that the to-be-measured object passes integrity verification. If the processing unit determines that the first measurement result is different from the first baseline value, or determines that the second measurement result is different from the second baseline value, it is determined that the to-be-measured object fails integrity verification.

With reference to the first aspect and second aspect, in a feasible implementation, the attestation module includes a local attestation module or a remote attestation module.

With reference to the first aspect and second aspect, in a feasible implementation, the to-be-measured object includes a memory code segment or a static file.

With reference to the first aspect and second aspect, in a feasible implementation, the to-be-measured object includes a memory code segment. The memory code segment includes at least one of a kernel code segment, a kernel module code segment, and a user-mode process code segment.

According to a third aspect, an embodiment of this application provides an integrity measurement includes a processor and a memory, the memory stores apparatus, where the integrity measurement apparatus code, and the processor runs the code to implement the integrity measurement method according to the first aspect.

According to a fourth aspect, this application provides a computer-readable storage medium. The computer-readable storage medium stores instructions. The instructions may be executed by one or more processors on a processing circuit. When the instructions are run on a computer, the computer is enabled to perform the integrity measurement method according to the first aspect.

### BRIEF DESCRIPTION OF DRAWINGS

FIG. 1 is a schematic diagram of a structure of an integrity measurement apparatus according to an embodiment of this application;
FIG. 2 is a schematic flowchart of an integrity measurement method according to an embodiment of this application;
FIG. 3 is still another schematic flowchart of an integrity measurement method according to an embodiment of this application;
FIG. 4 is still another schematic diagram of a structure of an integrity measurement apparatus according to an embodiment of this application;
FIG. 5 is still another schematic diagram of a structure of an integrity measurement apparatus according to an embodiment of this application;
FIG. 6 is still another schematic diagram of a structure of an integrity measurement apparatus according to an embodiment of this application;
FIG. 7 is still another schematic diagram of a structure of an integrity measurement apparatus according to an embodiment of this application; and
FIG. 8 is still another schematic diagram of a structure of an integrity measurement apparatus according to an embodiment of this application.

### DESCRIPTION OF EMBODIMENTS

The following clearly and completely describes the technical solutions in embodiments of this application with reference to the accompanying drawings in embodiments of this application.

It should be noted that, the terms "first", "second", and so on in the specification, claims, and accompanying drawings of the present invention are intended to distinguish between similar objects but do not necessarily indicate a specific order or sequence. It should be understood that the data or an object termed in such a way is interchangeable in proper circumstances so that embodiments of the present invention described herein can be implemented in other orders than the order illustrated or described herein. In addition, terms such as "include", "have", and any variations thereof are intended to cover non-exclusive inclusions, for example, a process, method, system, product, or device that includes a series of steps or units is not necessarily limited to those clearly listed steps or units, but may include other steps or units that are not clearly listed or inherent to such a process, method, product, or device.

In the conventional technology, a DIM method is usually used to perform integrity measurement on a memory, to determine whether the memory is maliciously attacked. However, an existing DIM process does not establish a complete trust chain, and security of a measurement module that performs the DIM method cannot be ensured in an execution process. When the security of the measurement module is threatened (such as being attacked by a hacker), a measurement result obtained by the measurement module is no longer trusted. Therefore, credibility of the measurement result of the existing DIM method is relatively low.

Therefore, a technical problem to be resolved in this application is how to improve accuracy and credibility of integrity measurement.

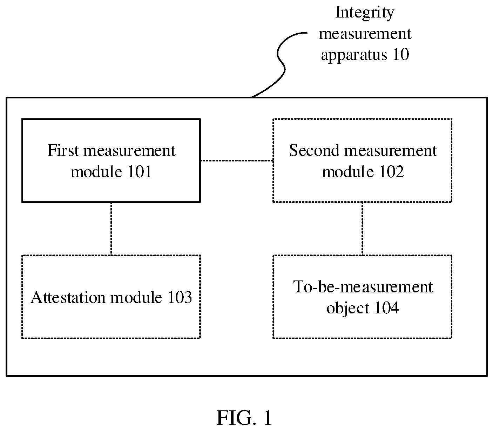

FIG. 1 is a schematic diagram of a structure of an integrity measurement apparatus according to an embodiment of this application. The integrity measurement apparatus is applicable to the integrity measurement method provided in this embodiment of this application. As shown in FIG. 1, the integrity measurement apparatus 10 may specifically include the first measurement module 101 in the integrity measurement method provided in this embodiment of this application. Optionally, the integrity measurement apparatus 10 may further include one or more of the second measurement module 102, the attestation module 103, and the to-be-measured object 104 in the integrity measurement method provided in this embodiment of this application. In actual application, the first measurement module 101 is configured to perform integrity measurement on the second measurement module 102 to obtain an integrity measurement result of the second measurement module 102 (for ease of understanding and distinction, a first measurement result is used as a substitute for description in the following). The second measurement module 102 is configured to perform integrity measurement on a preset to-be-measured object 104, and send an obtained integrity measurement result of the to-be-measured object 104 (for ease of understanding and distinction, a second measurement result is used as a substitute for description in the following) to the first measurement module 101. The first measurement module 101 is further configured to determine measurement result information based on the first measurement result and the second measurement result, and send the measurement result information to the attestation module 103. The attestation module 103 may be configured to determine, based on the measurement result information, whether the to-be-measured object 104 passes integrity verification. Herein, for a specific implementation of the module functions, refer to the following description of the integrity measurement method provided in embodiments of this application. Details are not described herein again.

Herein, it may be understood that, FIG. 1 is only an example of a structure of an integrity measurement system 10 according to an embodiment of this application. In actual application, the integrity measurement system 10 may further include functional modules other than the first measurement module 101, the second measurement module 102, and the attestation module 103. This is not specifically limited in this application.

Further, in an embodiment, the integrity measurement apparatus 10 may be an electronic device such as a tablet computer, a mobile terminal (such as a mobile phone), a laptop computer, a desktop computer, a wearable device, an optical line terminal (optical line terminal, OLT), or an optical network terminal (optical network terminal, ONT), or may be an internal chip or chip system in these electronic devices, such as a central processing unit (central processing unit, CPU), a microcontroller unit (microcontroller unit, MCU), or a system-on-a-chip (system-on-a-chip, SOC) including a CPU or an MCU that is in these electronic devices. This is not specifically limited in this application.

With reference to the structure of the integrity measurement apparatus 10 shown in FIG. 1, in an embodiment, the first measurement module 101, the second measurement module 102, the attestation module 103, and the to-be-measured object 104 may be specifically a software program or a software module that is run on the integrity measurement apparatus 10. Specifically, the integrity measurement apparatus 10 may include a processor and a memory. The memory stores program code or an instruction set corresponding to the first measurement module 101, the second measurement module 102, the attestation module 103, or the to-be-measured object 104. The processor runs the program code or the instruction set to support the first measurement module 101, the second measurement module 102, the attestation module 103, or the to-be-measured object 104 in implementing the method or functions in the integrity measurement method provided in this embodiment of this application. Certainly, it may be understood that, when the integrity measurement apparatus 10 includes a plurality of processors and a plurality of memories, the program code or the instruction set corresponding to the first measurement module 101, the second measurement module 102, the attestation module 103, or the to-be-measured object 104 may be respectively stored in different memories, and may be run and implemented in different processors. This is not specifically limited in this application. Herein, the processor may be specifically the foregoing CPU, MCU, SOC, or the like. The memory may include a high-speed random access memory, and may further include a non-volatile memory, such as one or more magnetic storage apparatuses, flash memories, or other non-volatile solid-state memories. In some instances, the memory may further include a memory remotely disposed relative to the processor. The remote memory may be connected to the integrity measurement apparatus 10 by using a network. An instance of the network includes but is not limited to an internet, an intranet, a local area network, a mobile communication network, and a combination thereof.

Further, in still another embodiment, the first measurement module 101 may be alternatively implemented by a hardware circuit that is internally or externally connected to the integrity measurement apparatus 10 and that has a logical processing capability. Specifically, logical information may be permanently written into the hardware circuit. After being powered on, the hardware circuit may implement the functions of the first measurement module 101 based on the logical information. Optionally, the hardware circuit may be a digital signal processor (digital signal processor, DSP), an application-specific integrated circuit (application specific integrated circuit, ASIC), a field programmable gate array (field programmable gate array, FPGA), or another programmable logic component, which is not specifically limited in this application.

Herein, it should be further noted that, in actual application, based on different locations of the attestation module 103, the attestation module 103 may be divided into a local attestation (that is, local attestation) module and a remote attestation (that is, remote attestation) module. The local attestation module means that the attestation module 103 and the first measurement module 101 run in a same apparatus. For example, when the attestation module 103 and the first measurement module 101 are run on a same computer, the attestation module 103 is a local attestation module with respect to the first measurement module 101. Optionally, in actual application, when the attestation module 103 is a local attestation module, the attestation module 103 may be included in the first measurement module 101, or may exist independently of the first measurement module 101. This is not specifically limited in this application. The remote attestation module means that the attestation module 103 and the first measurement module 101 exist in different apparatuses, and the attestation module 103 and the first measurement module 101 need to exchange data by using a secure network. Optionally, when the attestation module 103 is a remote attestation module, the attestation module 103 may include a remote attestation server (that is, an RA-server) and a remote attestation client (that is, an RA-client). The remote attestation server exchanges data with the first measurement module 103 by using the remote attestation client.

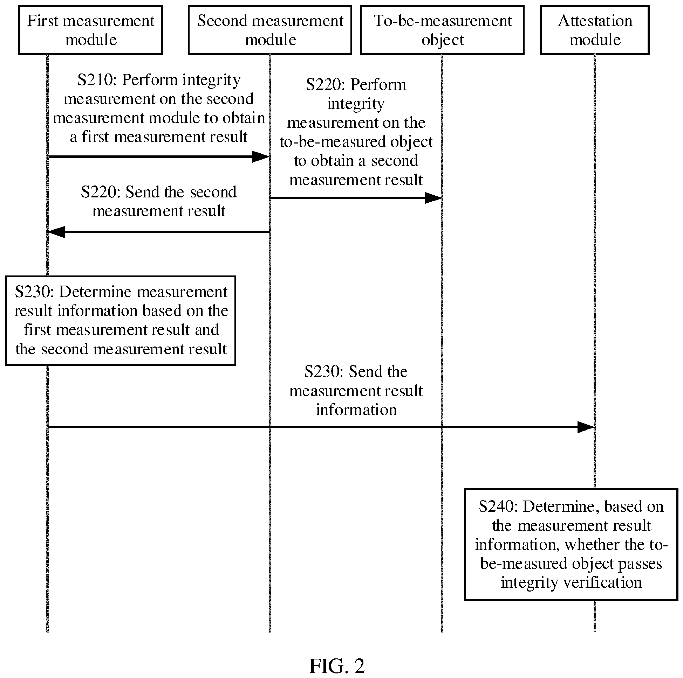

A process of the integrity measurement method provided in this application is specifically described below with reference to the structure of the integrity measurement apparatus 10 described in FIG. 1. FIG. 2 is a schematic flowchart of an integrity measurement method according to an embodiment of this application. As shown in FIG. 2, the integrity measurement method includes the following steps:

S210: A first measurement module performs integrity measurement on a second measurement module and determines a first measurement result.

S220: The second measurement module performs integrity measurement on a to-be-measured object 104 to obtain a second measurement result, and sends the second measurement result to the first measurement module.

S230: The first measurement module determines measurement result information based on the first measurement result and the second measurement result, and sends the measurement result information to an attestation module.

S240: The attestation module determines, based on the measurement result information, whether the to-be-measured object 104 passes integrity verification.

In some feasible implementations, as described in step S210, when the integrity measurement apparatus 10 is in a normal working state, after the first measurement module 101 determines that integrity measurement needs to be performed on the to-be-measured object 104, the first measurement module 101 may first perform integrity measurement on the second measurement module 102 to obtain a first measurement result.

Herein, it should be noted that credibility of the first measurement module 101 is higher than credibility of the second measurement module. Preferably, the first measurement module may be a trusted measurement root preset by the integrity measurement apparatus 10. Generally, the trusted measurement root is specifically a component that always runs in a preset manner. Content of the trusted measurement root is not modified. For an apparatus associated with the trusted measurement root, the trusted measurement root is absolutely credible. For example, in this embodiment of this application, the first measurement module 101 may be a trusted measurement root of the integrity measurement apparatus 10. For the integrity measurement apparatus 10 or any functional entity inside the integrity measurement apparatus 10, the first measurement module 101 is absolutely credible. The to-be-measured object 104 may be specifically a memory code segment that does not change in a memory image of the integrity measurement apparatus 10, such as a kernel code segment, a kernel module code segment, or a user process code segment. Alternatively, the to-be-measured object 104 may be a static file stored in the memory, or the like. In actual application, the to-be-measured object 104 may exist in the integrity measurement apparatus 10, or may exist in another apparatus connected to the integrity measurement apparatus 10. This is not specifically limited in this application. In an actual execution process, the to-be-measured object 104 may be preset, or may be determined by the first measurement module 101 according to instructions input by a user. This is not specifically limited in this application. For ease of understanding and description, an execution process of the integrity measurement method provided in this embodiment of this application is described below in detail by using an example in which the foregoing scenario in the integrity measurement apparatus 10 exists in all of the first measurement module 101, the second measurement module 102, and the to-be-measured object 104.

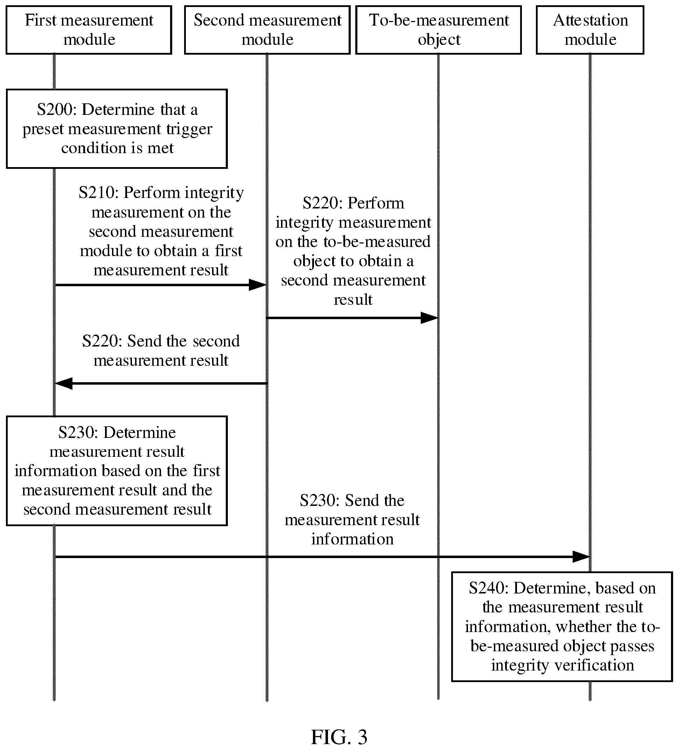

Optionally, FIG. 3 is still another schematic flowchart of an integrity measurement method according to an embodiment of this application. As shown in FIG. 3, before the performing, by the first measurement module 101, integrity measurement on the second measurement module 102, and determining a first measurement result, the integrity measurement method may further include the following step:

S200: The first measurement module determines that a preset measurement trigger condition is met, and then determines to perform integrity measurement on the to-be-measured object 104.

In some feasible implementations, the first measurement module 101 may first detect whether a preset measurement trigger condition is met. When determining that the measurement trigger condition is met, the first measurement module 101 determines to perform integrity measurement on the to-be-measured object 104. When determining that the measurement trigger condition is not met, the first measurement module 101 repeats an operation of detecting whether the preset measurement trigger condition is met.

It should be noted that the measurement trigger condition may specifically include that a preset measurement period arrives. Alternatively, the measurement trigger condition may include that a preset system exception event occurs. Herein, the system exception event includes but is not limited to code segment rewriting, high-risk system invoking, abnormal script execution, or the like. These system exception events are abnormal events of an operating system in which the to-be-measured object 104 is located, and occurrence of these system exception events may pose a security threat to the to-be-measured object 104. Alternatively, the measurement trigger condition may include that a measurement trigger instruction from a user is received. Herein, it may be understood that in actual application, the preset measurement trigger condition may include one or more of these three conditions: a preset measurement period arrives, a preset system exception event occurs, and a measurement trigger instruction from a user is received, and may further include conditions other than the foregoing three conditions. This is not specifically limited in this application. Herein, different measurement trigger conditions are set to trigger the first measurement module 1003 to actively start integrity measurement on the to-be-measured object 104, thereby reducing an attack time window of the to-be-measured object 104 and improving security of the to-be-measured object 104.

In an embodiment, when the measurement trigger condition includes that a preset measurement period arrives, it is assumed that a preset measurement period is duration T1. The first measurement module 101 may detect duration T2 between a current moment and a moment at which the first measurement module 101 performed integrity measurement on the to-be-measured object 104 last time. When the first measurement module 101 determines that T2 is equal to T1, it is determined that the preset measurement period arrives, and it may be determined that integrity measurement is performed on the to-be-measured object 104.

In another embodiment, when the measurement trigger condition includes that a preset system exception event occurs, an IDS in an operating system in which the to-be-measured object 104 is located detects, in real time, whether a system exception event occurs in the operating system. When detecting that one or more of system exception events occur in the operating system, the IDS may send one piece of system exception indication information to the first measurement module 101, and continue to perform exception event detection on the operating system. Then, if the first measurement module 101 detects the system exception indication information sent by the IDS, it may be determined that a preset system exception event occurs, and it may be determined that integrity measurement is performed on the to-be-measured object 104.

In still another embodiment, when the measurement trigger condition is that a measurement trigger instruction from a user is received, the first measurement module 101 may detect, in real time, a user instruction received by the first measurement module 101. When the first measurement module 101 detects that the user instruction received by the first measurement module 101 includes a preset measurement trigger instruction, it may be determined that integrity measurement is performed on the to-be-measured object 104. For example, it is assumed that the preset measurement trigger instruction is a measurement challenge instruction. When the attestation module 103 is a remote attestation module, a user may input an instruction that is used to indicate to perform integrity measurement on the to-be-measured into a remote attestation server of the attestation module 103. After receiving the instruction, the remote attestation server may send the measurement challenge instruction to the first measurement module by using a remote attestation client in the attestation module 103. After the first measurement module 101 detects the measurement challenge instruction, it may be determined that the preset measurement trigger instruction is received, and it may be determined that integrity measurement is performed on the to-be-measured object 104.

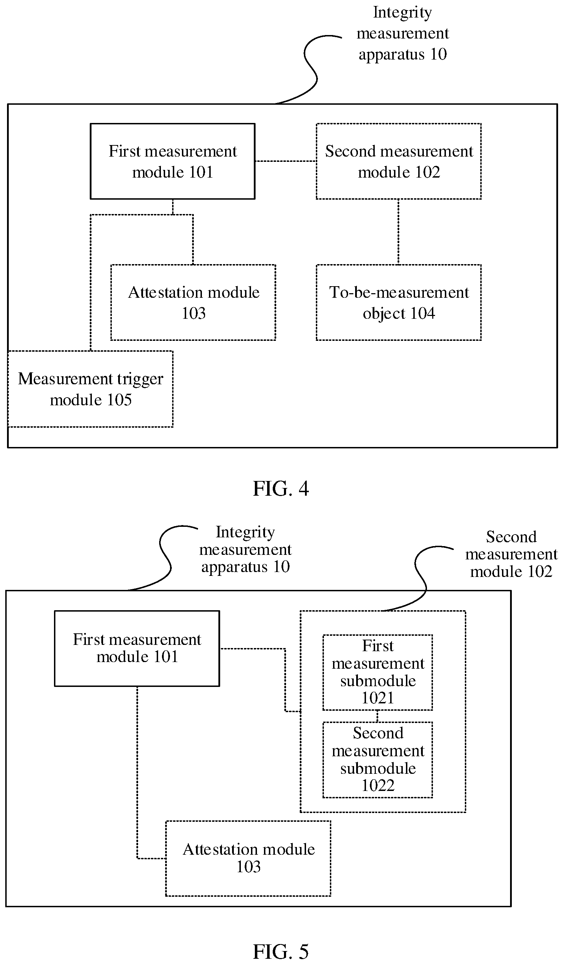

In still another embodiment, FIG. 4 is still another schematic diagram of a structure of an integrity measurement apparatus according to an embodiment of this application. As shown in FIG. 4, the integrity measurement apparatus 10 may further include a measurement trigger module 105. When the integrity measurement apparatus 10 further includes a measurement trigger module 104, an operation of determining whether a preset measurement trigger condition is met may be performed by the measurement trigger module 105. For example, the measurement trigger module 105 may determine whether a preset measurement period arrives, or detect whether system exception indication information from an IDS is received, or detect whether a measurement trigger instruction from a user is received. When the measurement trigger module 105 determines that the preset measurement trigger condition is met, the measurement trigger module 105 may send a measurement trigger instruction to the first measurement module 101. After the first measurement module 101 detects the measurement trigger instruction, it may be determined that integrity measurement is performed on the to-be-measured object 104. Herein, the measurement trigger module 105 performs an operation of determining whether a preset measurement trigger condition is met. This can reduce a data exchange amount between the first measurement module 101 and another module, and reduce a data processing amount of the first measurement module 101, thereby helping ensure security and credibility of the first measurement module 101.

Further, as described in step S210, after the first measurement module 101 determines to perform integrity measurement on the to-be-measured object 104, the first measurement module 101 may first perform integrity measurement on the second measurement module 102. A process in which the first measurement module 101 measures the second measurement module is described below in detail with reference to two scenarios in which the second measurement module 102 is an independent module or includes a plurality of submodules.

### Scenario 1:

In a scenario in which the second measurement module 102 is an independent module, the first measurement module 101 may first obtain a code segment corresponding to the second measurement module 102. For example, the first measurement module 101 may obtain address space fed back by the second measurement module 102 after a first start-up is completed (for ease of understanding, first address space is used as a substitute for description in the following), and extract a code segment corresponding to the second measurement module 102 from the first address space. For another example, the first measurement module 101 may alternatively traverse all code segments corresponding to an entire operating system, and determine, based on a code segment identifier corresponding to the second measurement module 102, a code segment corresponding to the second measurement module 102 from all the code segments of the entire operating system. Certainly, the first measurement module 101 may alternatively obtain a code segment corresponding to the second measurement module 102 in another manner. This is not specifically limited in this application. After the first measurement module 101 obtains the code segment corresponding to the second measurement module 102, the first measurement module 101 may perform hashing on the code segment corresponding to the second measurement module 102 by using a preset hash function (for ease of distinction, a first hash function is used as a substitute for description in the following), to obtain a hash value corresponding to the code segment. Then, the first measurement module 101 may determine the hash value as a first measurement result corresponding to the second measurement module 102.

Optionally, when the first measurement module 101 determines to perform integrity measurement on the second measurement module 102, the first measurement module 101 may further send one piece of measurement indication information (for ease of distinction, first measurement indication information is used as a substitute for description in the following) to the second measurement module 102. The first measurement indication information may be used to indicate, to the second measurement module 102, that the first measurement module 101 is to perform integrity measurement on the second measurement module 102.

### Scenario 2:

In a scenario in which the second measurement module 102 includes a plurality of submodules, FIG. 5 is still another schematic diagram of a structure of an integrity measurement apparatus according to an embodiment of this application. As shown in FIG. 5, the second measurement module 102 may include a first measurement submodule 1021 and a second measurement submodule 1022. In a specific implementation, the first measurement module 101 may first perform integrity measurement on the first measurement submodule 1021, to obtain a first measurement sub-result of the first measurement submodule 1021. Herein, for a specific process in which the first measurement module 101 performs integrity measurement on the first measurement submodule 1021, refer to a process, as described in scenario 1, in which the first measurement module 101 performs integrity measurement on the second measurement module 102. Details are not described herein again. Optionally, when the first measurement module 101 determines to initiate integrity measurement on the first measurement submodule 1021, the first measurement module 101 may further send one piece of measurement indication information (for ease of distinction, second measurement indication information is used as a substitute for description in the following) to the first measurement submodule 1021. The second measurement indication information may be used to indicate, to the first measurement submodule 1021, that the first measurement module 101 is to perform integrity measurement on the first measurement submodule 1021.

Further, the first measurement submodule 1021 may determine whether the first measurement module 101 performs integrity measurement on the first measurement submodule 1021. For example, the first measurement submodule 1021 may detect, in real time, the second measurement indication information, and when the first measurement submodule 1021 determines that the second measurement indication information from the first measurement module 101 is received, it may be determined that the first measurement module 101 performs integrity measurement on the first measurement submodule 1021. For another example, the first measurement submodule 1021 may alternatively obtain a current system log and search the system log to determine whether the first measurement module 101 performs integrity measurement on the first measurement submodule 1021. Certainly, the first measurement submodule 1021 may alternatively determine, in another manner, whether the first measurement module 101 performs integrity measurement on the first measurement submodule 1021. This is not specifically limited in this application. After the first measurement submodule 1021 determines that the first measurement module 101 performs integrity measurement on the first measurement submodule 1021, the first measurement submodule 1021 may alternatively perform integrity measurement on the second measurement submodule 1022 to obtain a second measurement sub-result corresponding to the second measurement submodule 1022. It should be noted that, for a specific process in which the first measurement submodule 1021 performs integrity measurement on the second measurement submodule 1022, refer to a process, as described in scenario 1, in which the first measurement module 101 performs integrity measurement on the second measurement module 102. Details are not described herein again. Then, the first measurement submodule 1021 may send the second measurement sub-result obtained by the first measurement submodule 1021 to the first measurement module 101. Optionally, when performing integrity measurement on the second measurement submodule 1022, the first measurement submodule 1021 may alternatively send one piece of measurement indication information to the second measurement submodule 1022 (for ease of distinction, third measurement indication information is used as a substitute for description in the following). The third measurement indication information may be used to indicate, to the second measurement submodule 1022, that the first measurement submodule 1021 performs integrity measurement on the second measurement submodule 1022.

In short, in this scenario, the first measurement module 101 performs integrity measurement on the second measurement module 102 that includes the first measurement submodule 1021 and the second measurement submodule 1022, and obtains the second measurement result that includes the first measurement sub-result and the second measurement sub-result.

Herein, it should be further noted that the structure of the second measurement module 102 shown in FIG. 5 is merely an example. The second measurement module 102 may alternatively include three or more measurement submodules, provided that at least one measurement submodule is configured to perform integrity measurement on the to-be-measured object 104. The first measurement module 101 performs integrity measurement on the second measurement module 102, that is, the first measurement module 101 performs integrity measurement on each measurement submodule in the second measurement module 102. A specific measurement process may be similar to that in the foregoing description. The first measurement module 101 measures only a measurement submodule A in the three or more measurement submodules. Other measurement submodules except the measurement submodule A in the three or more measurement submodules may be measured by the measurement submodule A, and a measurement result is sent to the first measurement module 101. Alternatively, the first measurement module 101 may directly perform integrity measurement on each measurement submodule and obtain an integrity measurement result of each measurement submodule.

In some feasible implementations, as described in step S220, the second measurement module 102 may alternatively perform integrity measurement on the to-be-measured object 104 and obtain a second measurement result corresponding to the to-be-measured object 104. A process in which the second measurement module 102 alternatively performs integrity measurement on the to-be-measured object 104 and obtains a second measurement result corresponding to the to-be-measured object 104 is described below with reference to the foregoing scenario 1 and scenario 2.

### Scenario 1:

In an embodiment, the second measurement module 102 may first determine whether the first measurement module 101 performs integrity measurement on the second measurement module 102. For example, the second measurement module 102 may detect whether first measurement indication information from the first measurement module 101 is received. When the second measurement module 102 determines that the first measurement indication information from the first measurement module is received, it may be determined that the first measurement module 101 performs integrity measurement on the second measurement module 102. Alternatively, the second measurement module 102 may search a system log to determine whether the first measurement module 101 performs integrity measurement on the second measurement module 102. Certainly, the second measurement module 102 may alternatively determine, in another manner, whether the first measurement module 101 performs integrity measurement on the second measurement module 102. This is not specifically limited in this application.

Further, after determining that the first measurement module 101 performs integrity measurement on the second measurement module 102, the second measurement module 102 may perform integrity measurement on the to-be-measured object 104 to obtain a second measurement result corresponding to the to-be-measured object 104. Herein, the to-be-measured object 104 may be preset, or may be specified by a user by using a user instruction. This is not specifically limited in this application. As described above, when the to-be-measured object 104 is a memory code segment such as a kernel code segment or a user process code segment, the second measurement module 102 may obtain specific content of the memory code segment, and then perform hashing on the memory code segment by using a preset hash function (for ease of distinction, a second hash function is used as a substitute for description in the following) to obtain a corresponding hash value, where the hash value is a second measurement result of the to-be-measured object 104. Similarly, when the to-be-measured object 104 is a static file, the second measurement module 102 may obtain specific content of the static file, and then perform hashing on the specific content by using the second hash function to obtain a corresponding hash value. In this way, a second measurement result of the to-be-measured object 104 is obtained.

Further, after obtaining the second measurement result, the second measurement module 102 may further send the second measurement result to the first measurement module 101.

### Scenario 2:

In an embodiment, a second measurement submodule 1022 in the second measurement module 102 may first determine whether the first measurement module 101 performs integrity measurement on a first measurement submodule 1021. For example, the second measurement submodule 1022 may detect whether third measurement indication information from the first measurement submodule 1021 is received. If the second measurement submodule 1022 determines that the third measurement indication information is received, it may be determined that the first measurement module 101 performs integrity measurement on the second measurement module 102. Alternatively, the second measurement submodule 1022 may search a system log to determine whether the first measurement module 101 performs integrity measurement on the second measurement module 102.

Further, after the second measurement submodule 1022 determines that the first measurement module 101 performs integrity measurement on the first measurement submodule 1021, the second measurement submodule 1022 may perform integrity measurement on the to-be-measured object 104 to obtain a second measurement result corresponding to the to-be-measured object 104. Herein, for a process in which the second measurement submodule 1022 performs integrity measurement on the to-be-measured object 104, refer to the foregoing process in which the second measurement module 102 performs integrity measurement on the to-be-measured object 104. Details are not described herein again. After obtaining the second measurement result, the second measurement submodule 1022 may directly send the second measurement result to the first measurement module 101, or may alternatively send the second measurement result to the first measurement submodule 1021, and then forward the second measurement result to the first measurement module 101 by using the first measurement submodule 1021.

In some feasible implementations, as described in step S230, after obtaining the first measurement result and the second measurement result, the first measurement module 101 may determine measurement result information based on the first measurement result and the second measurement result, and send the measurement result information to the attestation module 103. This embodiment of this application provides a plurality of manners of determining measurement result information. A process in which the first measurement module 101 determines the measurement result information and sends the measurement result information to the attestation module 103 is described below with reference to the foregoing scenario 1 and scenario 2, and the plurality of manners of determining measurement result information provided in this embodiment of this application.

### Manner 1 of determining a measurement result:

In the foregoing scenario 1, after obtaining the first measurement result and the second measurement result, the first measurement module 101 may directly determine the first measurement result and the second measurement result as measurement result information. In the foregoing scenario 2, after obtaining the first measurement sub-result, the second measurement sub-result, and the second measurement result, the first measurement module 101 may directly determine the first measurement sub-result, the second measurement sub-result, and the second measurement result as measurement result information. Herein, the first measurement module 101 directly determines the first measurement result and the second measurement result as measurement result information, or determines the first measurement sub-result, the second measurement sub-result, and the second measurement result as measurement result information, and sends the measurement result information to the second measurement module 102. This method is simple and easy to implement, and efficiency of the integrity measurement can be improved.

Further, after determining the measurement result information, the first measurement module 101 may send the measurement result information to the second measurement module 102. Optionally, after obtaining the measurement result information, the first measurement module 101 may encrypt the measurement result information in a manner such as a digital certificate or a digital signature, and send the encrypted measurement result information to an attestation module. In this way, security for transmission of the measurement result information can be improved.

### Manner 2 of determining measurement result information:

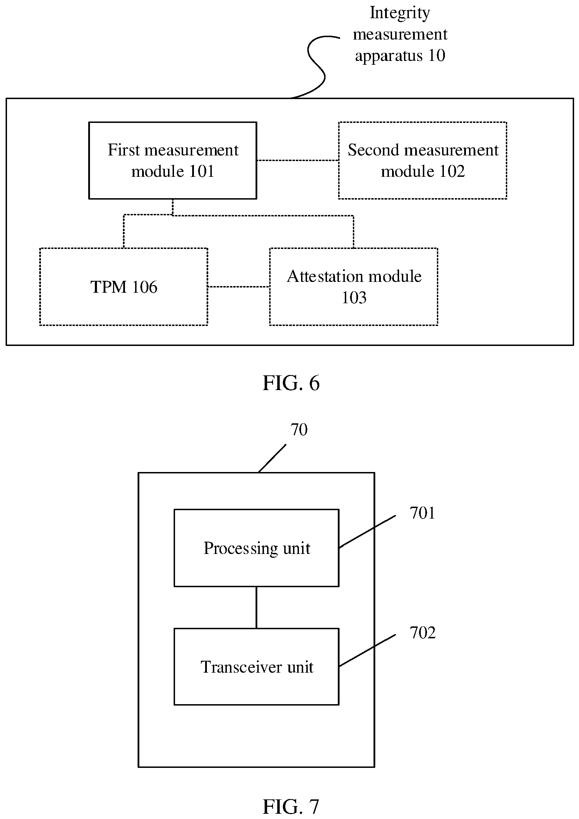

FIG. 6 is still another schematic diagram of a structure of an integrity measurement apparatus according to an embodiment of this application. As shown in FIG. 6, the integrity measurement structure 10 may further include a trusted platform module TPM 106. The TPM 106 includes a PCR, and the PCR may store one or more PCR values obtained through extension of the TPM 106.

In the foregoing scenario 1, after obtaining the first measurement result and the second measurement result, the first measurement module 101 may separately extend the first measurement result and the second measurement result to a PCR of the TPM 106, to obtain a first PCR value corresponding to the first measurement result and a second PCR value corresponding to the second measurement result. Specifically, the first measurement module 101 may first initiate a PCR extension operation on the TPM 106, and send the first measurement result to the TPM 106. Then, after determining to perform the PCR extension operation and receive the first measurement result, the TPM 106 may extract a PCR storage value corresponding to the first measurement result from the PCR (for ease of distinction, a first PCR storage value is used as a substitute for description in the following). Herein, the first PCR storage value is a PCR value obtained by the first measurement module 101 extending a measurement result of the second measurement module 102 to the PCR in the TPM 106 when the integrity measurement apparatus 10 performed integrity measurement on the to-be-measured object 104 last time. Then, the TPM 106 may perform PCR extension processing on the first measurement result and the first PCR storage value, to obtain a first PCR value corresponding to the first measurement result. For example, the TPM 106 may perform hashing on the first measurement result and the first PCR storage value by using a preset hash function (for ease of distinction, a third hash function is used as a substitute for description in the following), and determine the obtained hash value as the first PCR value corresponding to the first measurement result. Optionally, the TPM 106 may further update the current first PCR storage value to a current first PCR value. For example, it is assumed that the first PCR storage value is d1, and the first measurement result is d2. After obtaining the first measurement result d2 and the first PCR storage value d1, the TPM 106 may simultaneously perform hashing on d1 and d2, to obtain a first PCR value d3. Then, the TPM 106 may further update the first PCR storage value from d1 to d3. Herein, it should be noted that if current measurement is first integrity measurement performed by the integrity measurement apparatus 10 on the to-be-measured object, the TPM 106 may simultaneously perform PCR extension processing on the first measurement result and a PCR initial value preset by the second measurement module, to obtain a first PCR value corresponding to the first measurement result. Similarly, the first measurement module 101 may alternatively perform PCR extension on the second measurement result by using the TPM 106, to obtain a second PCR value corresponding to the second measurement result. For a specific process, refer to the foregoing process in which the first PCR value corresponding to the first measurement result is obtained through extension of the TPM 106. Details are not described herein again.

Further, the TPM 106 determines the first PCR value and the second PCR value as measurement result information, and sends the measurement result information to the attestation module 103.

In the foregoing scenario 2, after obtaining the first measurement sub-result, the second measurement sub-result, and the second measurement result, the first measurement module 101 may separately extend the first measurement sub-result, the second measurement sub-result, and the second measurement result to the PCR of the TPM 106, to obtain a first sub-PCR value corresponding to the first measurement sub-result, a second sub-PCR value corresponding to the second measurement sub-result, and a second PCR value corresponding to the second measurement result. Herein, for a process in which the first measurement module 101 obtains the first sub-PCR value, the second sub-PCR value, and the second PCR value through extension of the TPM 106, refer to the foregoing process of determining the first PCR value by using the TPM 106. Details are not described herein again. Then, after obtaining the first PCR sub-value, the second PCR sub-value, and the second PCR value, the TPM 106 may determine the first PCR sub-value, the second PCR sub-value, and the second PCR value as measurement result information.

Further, after determining the measurement result information, the TPM 106 may send the measurement result information to the attestation module 103. Optionally, the TPM 106 may encrypt the measurement result information in a manner such as a digital certificate or a digital signature, and send the encrypted measurement result information to the attestation module 103. In this way, security for transmission of the measurement result information can be ensured.

Herein, the first measurement module 102 first extends the measurement result to a corresponding PCR value by using the TPM 106 with relatively high security and credibility, and then sends, by using the TPM 106, the PCR value that is obtained through extension and that is used as the measurement result information to the attestation module 103. This can effectively prevent occurrence of a case such as tampering of the measurement result, and ensure security for transmission of the measurement result.

In some feasible implementations, as described in step S240, after receiving the measurement result information, the attestation module 103 may determine, based on the measurement result information, whether the to-be-measured object 104 passes integrity verification. A process in which the attestation module 103 determines, based on the measurement result information, whether the to-be-measured object 104 passes integrity verification is described below in detail with reference to the manner 1 of determining measurement result information, the manner 2 of determining measurement result information, and two different scenarios described above.

In an embodiment, when the first measurement module 101 obtains the measurement result information by using the manner 1 of determining measurement result information, in the foregoing scenario 1, the measurement result information received by the attestation module 103 may include a first measurement result and a second measurement result described above. Then, the attestation module 103 may obtain a preset first baseline value corresponding to the second measurement module 102 and a second baseline value corresponding to the to-be-measured object 104. Then, the attestation module 103 may determine whether the first measurement result is the same as the first baseline value. If the attestation module 103 determines that the first measurement result is the same as the first baseline value, the attestation module 103 may continue to determine whether the second measurement result is the same as the second baseline value. If the attestation module 103 determines that the second measurement result is the same as the second baseline value, the attestation module 103 may determine that the to-be-measured object 104 passes integrity verification, and content of the to-be-measured object 104 is not tampered with. If the attestation module 103 determines that the first measurement result is different from the first baseline value, or the second measurement result is different from the second baseline value, the attestation module 103 may determine that the to-be-measured object 104 fails integrity verification. Content of the to-be-measured object 104 is tampered with, and there is a security risk. Herein, it may be understood that the attestation module 103 may alternatively first determine whether the second measurement result is the same as the second baseline value, and then determine whether the first measurement result is the same as the first baseline value. Order of determining is not specifically limited in this application.

In another embodiment, when the first measurement module 101 obtains the measurement result information by using the manner 1 of determining measurement result information, in the foregoing scenario 2, the measurement result information received by the attestation module 103 may include a first measurement sub-result, a second measurement sub-result, and a second measurement result. Then, the attestation module 103 may obtain a preset first sub-baseline value corresponding to the first measurement submodule 1021, a preset second sub-baseline value corresponding to the second measurement submodule 1022, and a second baseline value corresponding to the to-be-measured object 104. Then, the attestation module 103 may determine whether the first measurement sub-result is the same as the first sub-baseline value, whether the second measurement sub-result is the same as the second sub-baseline value, and whether the second measurement result is the same as the second baseline value. When determining that the first measurement sub-result is the same as the first sub-baseline value, the second measurement sub-result is the same as the second sub-baseline value, and the second measurement result is the same as the second baseline value, the attestation module 103 may determine that the to-be-measured object 104 passes integrity verification, and content of the to-be-measured object 104 is not tampered with. When determining that the first measurement sub-result is different from the first sub-baseline value, or the second measurement sub-result is different from the second sub-baseline value, or the second measurement result is different from the second baseline value, the attestation module 103 may determine that the to-be-measured object 104 fails integrity verification. Content of the to-be-measured object 104 is tampered with, and there is a security risk. Herein, for a specific process in which the attestation module 103 determines, based on the first measurement sub-result, the second measurement sub-result, and the second measurement result, and the first sub-baseline value, the second sub-baseline value, and the second baseline value, whether the to-be-measured object 104 passes integrity verification, refer to the foregoing process in which the attestation module 103 determines, based on the first measurement result, the second measurement result, the first baseline value, and the second baseline value, whether the to-be-measured object 104 passes integrity verification. Details are not described herein again.

In still another embodiment, after the first measurement module 101 obtains the measurement result information by using the manner 2 of determining measurement result information, in the foregoing scenario 1, the measurement result information received by the attestation module 103 may include a first PCR value and a second PCR value. Then, the attestation module 103 may determine the first PCR check-value and the second PCR check-value that are corresponding to the second measurement module 102 and the to-be-measured. Specifically, the attestation module 103 may first extract a preset PCR initial value corresponding to the second measurement module 102 (the PCR initial value is consistent with the PCR initial value that is initially stored in the TPM 106 and that is corresponding to the second measurement module 102) and a preset first baseline value corresponding to the second measurement module 102, and then determine, based on a PCR extension record of the TPM 105, order of extension and a quantity of times of extension (it is assumed herein that the quantity of times of extension is T1) that are used to extend the TPM 105 to obtain the first PCR value. Then, the attestation module 103 may extend the first PCR initial value and the first baseline value for T1 times based on the order of extension, to obtain the first PCR check-value. Herein, a process in which the attestation module 103 performs PCR extension on the first original PCR value and the first baseline value is the same as the foregoing process in which the TPM 106 extends the first measurement result and the first PCR storage value, and a specific process is not described herein again. Similarly, the attestation module 103 may alternatively extend a preset second baseline value corresponding to the to-be-measured object 104 and the PCR initial value corresponding to the to-be-measured object, to obtain the second PCR check-value corresponding to the to-be-measured object 104.

Then, the attestation module 103 may determine whether the first PCR value is the same as the first PCR check-value. If the attestation module 103 determines that the first PCR value is the same as the first PCR check-value, the attestation module 103 may continue to determine whether the second PCR value is the same as the second PCR check-value. If the attestation module 103 determines that the second PCR value is the same as the second PCR check-value, the attestation module 103 may determine that the to-be-measured object 104 passes integrity verification, and content of the to-be-measured object 104 is not tampered with. If the attestation module 103 determines that the first PCR value is different from the first PCR check-value, or the second PCR value is different from the second PCR check-value, the attestation module 103 may determine that the to-be-measured object 104 fails integrity verification. Content of the to-be-measured object 104 is tampered with, and there is a security risk. Herein, it may be understood that the attestation module 103 may alternatively first determine whether the second PCR value is the same as the second PCR check-value, and then determine whether the first PCR value is the same as the first PCR check-value. Order of determining is not specifically limited in this application.

In still another embodiment, after the first measurement module 101 obtains the measurement result information by using the manner 2 of determining measurement result information, in the foregoing scenario 2, the measurement result information received by the attestation module 103 may include a first PCR sub-value, a second PCR sub-value, and a second PCR value. Then, the attestation module 103 may determine a first sub-PCR check-value, a second sub-PCR check-value, and a second PCR check-value that are corresponding to the first measurement submodule 1021, the second measurement submodule 1022 and the to-be-measured object 104. Herein, for a process in which the attestation module 103 determines the first sub-PCR check-value, the second sub-PCR check-value, and the second PCR check-value, specifically refer to the foregoing process in which the attestation module determines the first PCR check-value. Details are not described herein again. Then, the attestation module 103 may determine whether the first sub-PCR value is the same as the first sub-PCR check-value, whether the second sub-PCR value is the same as the second sub-PCR check-value, and whether the second PCR value is the same as the second PCR check-value. If the attestation module 103 determines that the first sub-PCR value is the same as the first sub-PCR check-value, the second sub-PCR value is the same as the second sub-PCR check-value, and the second PCR value is the same as the second PCR check-value, the attestation module 103 may determine that the to-be-measured object 104 passes integrity verification, and content of the to-be-measured object 104 is not tampered with. If the attestation module 103 determines that the first sub-PCR value is different from the first sub-PCR check-value, or the second sub-PCR value is different from the second sub-PCR check-value, or the second PCR value is different from the second PCR check-value, the attestation module 103 may determine that the to-be-measured object 104 fails integrity verification. Content of the to-be-measured object 104 may be tampered with, and there is a security threat. Herein, for a specific determining process performed by the attestation module 103, refer to the foregoing process in which the attestation module 103 determines the first PCR value and the second PCR value. Details are not described herein again.

In an optional actual application, in the foregoing scenario 1, the first measurement module 101 may be specifically a DIM TEE module that runs in the integrity measurement apparatus 10, or a hardware security module (hardware security module, HSM) that exists inside or outside the integrity measurement apparatus 10. The second measurement module 102 may be specifically a DIM module that runs in the integrity measurement apparatus 10. The to-be-measured object 104 may be specifically one or more of a kernel code segment, a code segment of a kernel module, and a code segment of a user-mode process in the memory of the integrity measurement apparatus 10. The attestation module 103 may be a local attestation module that runs in the integrity measurement apparatus 10, or a remote attestation module that runs in an apparatus other than the integrity measurement apparatus 10. In a specific implementation, after determining that integrity measurement is performed on the to-be-measured object 104, the DIM TEE module or the HSM may first measure the DIM module to obtain a first measurement result, and at the same time, trigger the DIM module to perform integrity measurement on the to-be-measured object 104 to obtain a second measurement result. Then, the DIM TEE module or the HSM may send measurement result information determined based on the first measurement result and the second measurement result to the attestation module 103. The attestation module 103 may determine, based on the measurement result information, whether the to-be-measured object 104 passes integrity verification. Herein, for a specific measurement and attestation process, refer to the foregoing description. Details are not described herein again.

In another optional actual application, in the foregoing scenario 2, the first measurement module 101 may be specifically an HSM that is inside or outside the integrity measurement apparatus 10. The first measurement submodule in the second measurement module 102 may be a DIM TEE module that runs in the integrity measurement apparatus 10. The second measurement submodule may be a DIM module that runs in the integrity measurement apparatus 10. The to-be-measured object 104 may be specifically one or more of a kernel code segment, a code segment of a kernel module, and a code segment of a user-mode process in the memory of the integrity measurement apparatus 10. The attestation module 103 may be a local attestation module that runs in the integrity measurement apparatus 10, or a remote attestation module that runs in an apparatus other than the integrity measurement apparatus 10. In a specific implementation, after determining that integrity measurement is performed on the to-be-measured object 104, the HSM may first initiate integrity measurement on the DIM TEE module to obtain a first measurement sub-result of the DIM TEE module. At the same time, the DIM TEE module may initiate integrity measurement on the DIM module to obtain a second measurement sub-result of the DIM module and send the second measurement sub-result to the HSM. The DIM module may alternatively initiate integrity measurement on the to-be-measured object 104 to obtain a second measurement result of the to-be-measured object 104 and send the second measurement result to the HSM. Then, the HSM may send measurement result information that is determined based on the first measurement sub-result, the second measurement sub-result, and the second measurement result to the attestation module 103, so that the attestation module 103 can determine, based on the measurement result information, whether the to-be-measured object 104 passes integrity measurement. Herein, for a specific measurement and attestation process, refer to the foregoing description. Details are not described herein again.

Herein, it may be understood that the first measurement module 101, the second measurement module 102, and the attestation module 103 may alternatively be modules with a same function other than the foregoing several modules. This is not specifically limited in this application.

In addition, it should be further noted that, in the foregoing integrity measurement process, the first measurement module 103 sends, only after the first measurement result and the second measurement result are obtained, the measurement result information determined based on the first measurement result and the second measurement result to the attestation module 103 for attestation. In an embodiment, after obtaining the first measurement result, the first measurement module 103 may first send the first measurement result to the attestation module 103, so that the attestation module 103 can first perform integrity verification on the second measurement module 102. After determining that the second measurement module passes integrity verification (that is, the first measurement result is the same as a preset baseline value, or a PCR value corresponding to the first measurement result is the same as a corresponding PCR check-value), the attestation module 103 may send one piece of verification success information to the first measurement module 101. When determining that the second measurement module 102 fails integrity verification (that is, the first measurement result is different from a preset baseline value, or a PCR value corresponding to the first measurement result is different from a preset PCR check-value), the attestation module 103 may send one piece of verification failure information to the first measurement module 101, or provide no feedback on the first measurement module 101 within a preset time period. Then, if the first measurement module 101 receives the verification success information, the first measurement module 103 may trigger the second measurement module 102 to measure the to-be-measured object 104 to obtain a second measurement result, and then send the second measurement result to the attestation module 103 to perform integrity verification on the to-be-measured object 104. If the first measurement module 101 receives the verification failure information, or receives no feedback from the attestation module 103 within the preset time period, the first measurement module 103 may determine that the second measurement module 102 fails integrity verification, and may repeat the operation of determining whether a measurement trigger condition is met. Herein, integrity measurement continues to be performed on the to-be-measured object 104 only when it is determined that the second measurement module 102 passes integrity verification. This can avoid an invalid operation performed on the to-be-measured object 104 due to integrity verification failure of the second measurement module 102, and can improve efficiency of the integrity measurement.

In this embodiment of this application, the first measurement module 103 obtains the first measurement result corresponding to the second measurement module 102 and the second measurement result corresponding to the to-be-measured object 104, and sends the measurement result information corresponding to the first measurement result and the second measurement result to the attestation module 103 for attestation. Therefore, all the measurement results are obtained according to the entire measurement method in which the first measurement module 103 with quite high credibility is used as a measurement root, and are provided to the attestation module 103. In this way, credibility of an attestation result obtained by the attestation module 103 is high, thereby improving accuracy and credibility of the integrity measurement method.

FIG. 7 is still another schematic diagram of a structure of an integrity measurement apparatus according to an embodiment of this application. The integrity measurement apparatus 70 may be the foregoing first measurement module 101. As shown in FIG. 7, the integrity measurement apparatus 70 includes a processing unit 701 and a transceiver unit 702.

In a specific implementation, the processor unit 701 may be configured to perform integrity measurement on the second measurement module 102 to obtain a first measurement result. Credibility of the first measurement module 101 is higher than credibility of the second measurement module 102. The transceiver unit 702 may be configured to receive a second measurement result sent by the second measurement module 102. The second measurement result is obtained by the second measurement module 102 performing integrity measurement on the to-be-measured object 104. The processing unit 701 is further configured to determine measurement result information based on the first measurement result and the second measurement result. The transceiver unit 702 is further configured to send the measurement result information to an attestation module 103. The attestation module 103 is configured to determine, based on the measurement result information, whether the to-be-measured object 104 passes integrity verification.

In a feasible implementation, the processing unit 701 may determine the first measurement result and the second measurement result as measurement result information. Then, the transceiver unit 702 may send the measurement result information to the attestation module 103.

In a feasible implementation, the transceiver unit 702 may separately send the first measurement result and the measurement result to a TPM. The TPM may separately perform platform configuration register PCR extension on the first measurement result and the second measurement result to obtain a first PCR value and a second PCR value that are corresponding to the first measurement result. The TPM may further determine the first PCR value and the second PCR value as the measurement result information and send the measurement result information to the attestation module 103.

In a feasible implementation, the second measurement module 102 includes a first measurement submodule and a second measurement submodule. The first measurement result includes a first measurement sub-result and a second measurement sub-result. The processing unit 701 is configured to perform integrity measurement on the first measurement submodule to obtain a first measurement sub-result. The first measurement submodule performs integrity measurement on the second measurement submodule to obtain a second measurement sub-result, and sends the second measurement result to the transceiver unit 702.

In a feasible implementation, the processing unit 701 is configured to determine the first measurement sub-result, the second measurement sub-result, and the second measurement result as the measurement result information. The first measurement module 101 sends the measurement result information to the attestation module 103.

In a feasible implementation, the transceiver unit 702 may separately send the first measurement sub-result, the second measurement sub-result, and the second measurement result to a TPM. The TPM separately performs PCR extension on the first measurement sub-result, the second measurement sub-result, and the second measurement result, to obtain a first sub-PCR value corresponding to the first measurement sub-result, a second sub-PCR value corresponding to the second measurement sub-result, and a second PCR value corresponding to the second measurement result. The TPM determines the first sub-PCR value, the second sub-PCR value, and the second PCR value as measurement result information, and sends the measurement result information to the attestation module 103.

In a feasible implementation, before the performing, by the first measurement module 101, integrity measurement on the second measurement module 102 to obtain a first measurement result, the processing unit 701 may further determine that a preset measurement trigger condition is met. Herein, the measurement trigger condition is at least one of the following: a preset measurement period arrives, a preset system exception event occurs, and a measurement trigger instruction from a user is received.

In a feasible implementation, when the measurement trigger condition is that a preset system exception event occurs, if the processing unit 701 determines that a system exception message sent by an IDS is received, it is determined that the preset trigger condition is met. Herein, the system exception message is sent by the IDS when the IDS detects that the system exception event occurs.

In a feasible implementation, when the processing unit 701 determines that the preset measurement trigger condition is met, the transceiver unit 702 may further send first measurement indication information to the second measurement module 102. The first measurement indication information is used to indicate, to the second measurement module 102, that the first measurement module 101 is to perform integrity measurement on the second measurement module 102.

In a feasible implementation, the first measurement module 101 is a preset trusted measurement root.

In a feasible implementation, the first measurement module 101 is a DIM TEE module or an HSM, and the second measurement module 102 is a DIM module.

In a feasible implementation, the first measurement module 101 is an HSM, the first measurement submodule is a DIM TEE module, and the second measurement submodule is a DIM module.

In a feasible implementation, the attestation module 103 includes a local attestation module 103 or a remote attestation module 103.

In a feasible implementation, the to-be-measured object 104 includes a memory code segment or a static file.

In a feasible implementation, the to-be-measured object 104 includes a memory code segment, and the memory code segment includes at least one of a kernel code segment, a kernel module code segment, and a user-mode process code segment.

Still referring to FIG. 7, the integrity measurement apparatus 70 may alternatively be the foregoing attestation module 103. In a specific implementation, the transceiver unit 702 is configured to receive measurement result information sent by the first measurement module 101. The measurement result information is determined based on a first measurement result and a second measurement result. The first measurement result is a result obtained by the first measurement module 101 performing integrity measurement on the second measurement module 102. The second measurement result is a result obtained by the second measurement module 102 performing integrity measurement on the to-be-measured object 104. Credibility of the measurement module is higher than credibility of the second measurement module 102. The processing unit 701 is configured to determine, based on the measurement result information, whether the to-be-measured object 104 passes integrity verification.

In a feasible implementation, the measurement result information includes the first measurement result and the second measurement result. If the processing unit 701 determines that the first measurement result is the same as a first baseline value corresponding to the second measurement module 102, and the second measurement result is the same as a second baseline value corresponding to the to-be-measured object 104, it is determined that the to-be-measured object 104 passes integrity verification. If the processing unit 701 determines that the first measurement result is different from the first baseline value, or determines that the second measurement result is different from the second baseline value, it is determined that the to-be-measured object 104 fails integrity verification.

In a feasible implementation, the measurement result information includes a first PCR value and a second PCR value. The first PCR value is obtained by the first measurement module 101 performing PCR extension on the first measurement result by using a TPM, and the second PCR value is obtained by the first measurement module 101 performing PCR extension on the second measurement result by using the TPM. If the processing unit 701 determines that the first PCR value is equal to a first PCR check-value and that the second PCR value is equal to a second PCR check-value, it is determined that the to-be-measured object 104 passes integrity verification. If the processing unit 701 determines that the first PCR value is not equal to the first PCR check-value, or determines that the second PCR value is not equal to the second PCR check-value, it is determined that the to-be-measured object 104 fails integrity verification. The first PCR check-value is obtained by the attestation module 103 performing PCR extension on the first baseline value and a first PCR initial value that are corresponding to the second measurement module 102. The second PCR check-value is obtained by the attestation module 103 performing PCR extension on the second baseline value and a second PCR initial value that are corresponding to the to-be-measured object 104.

In a feasible implementation, the second measurement module 102 includes a first measurement submodule and a second measurement submodule, and the first measurement result includes a first measurement sub-result and a second measurement sub-result. The measurement result information includes the first measurement sub-result, the second measurement sub-result, and the second measurement result. If the processing unit 701 determines that the first measurement sub-result is the same as a first sub-baseline value corresponding to the first measurement submodule, the second measurement sub-result is the same as a second sub-baseline value corresponding to the second measurement submodule, and the second measurement result is the same as the second baseline value corresponding to the to-be-measured object 104, it is determined that the to-be-measured object 104 passes integrity verification. If the processing unit 701 determines that the first measurement sub-result is different from a first sub-baseline value corresponding to the first measurement submodule, the second measurement sub-result is different from a second sub-baseline value corresponding to the second measurement submodule, or the second measurement result is the same as the second baseline value corresponding to the to-be-measured object 104, it is determined that the to-be-measured object 104 fails integrity verification.

In a feasible implementation, the second measurement module 102 includes a first measurement submodule and a second measurement submodule, and the first measurement result includes a first measurement sub-result and a second measurement sub-result. The measurement result information includes a first sub-PCR value, a second sub-PCR value, and a second PCR value, where the first sub-PCR value is obtained by the first measurement module 101 performing PCR extension on the first measurement sub-result by using a TPM, the second sub-PCR value is obtained by the first measurement module 101 performing PCR extension on the second measurement sub-result by using the TPM, and the second PCR value is obtained by the first measurement module 101 performing PCR extension on the second measurement result by using the TPM. If the processing unit 701 determines that the first sub-PCR value is equal to a first sub-PCR check-value, the second sub-PCR value is equal to a second sub-PCR check-value, and the second PCR value is equal to the second PCR check-value, it is determined that the to-be-measured object 104 passes integrity verification. If the processing unit 701 determines that the first sub-PCR value is not equal to a first sub-PCR check-value, or the second sub-PCR value is not equal to a second sub-PCR check-value, or the second PCR value is not equal to the second PCR check-value, it is determined that the to-be-measured object 104 fails integrity verification. The first sub-PCR check-value is obtained by the attestation module 103 performing PCR extension on the first sub-baseline value and a first sub-PCR initial value that are corresponding to the second measurement module 102. The second sub-PCR check-value is obtained by the attestation module 103 performing PCR extension on the second sub-baseline value and a second sub-PCR initial value that are corresponding to the second measurement module 102. The second PCR check-value is obtained by the attestation module 103 performing PCR extension on the second baseline value and the second PCR initial value that are corresponding to the to-be-measured object 104.

Still referring to FIG. 7, the integrity measurement apparatus 70 may alternatively be the foregoing second measurement module 102. In a specific implementation, the processing unit 701 is configured to: when it is determined that the first measurement module 101 performs integrity measurement on the second measurement module 102, perform integrity measurement on the to-be-measured object 104 to obtain a second measurement result. Credibility of the first measurement module 101 is higher than credibility of the second measurement module 102. The transceiver unit 702 is configured to send the second measurement result to the first measurement module 101.

In a feasible implementation, if the processing unit 701 determines that the transceiver unit 702 receives first measurement indication information, it may be determined that the first measurement module 101 performs integrity measurement on the second measurement module 102.

Herein, it should be noted that, when one or more of the first measurement module 101, the second measurement module 102, the attestation module 103, and the to-be-measured object 104 simultaneously work in the integrity measurement apparatus 70, the processing unit 701 and the transceiver unit 701 may separately perform functions corresponding to one or more of the first measurement module 101, the second measurement module 102, the attestation module 103, and the to-be-measured object 104. For a specific implementation process, refer to the foregoing description. Details are not described herein again.

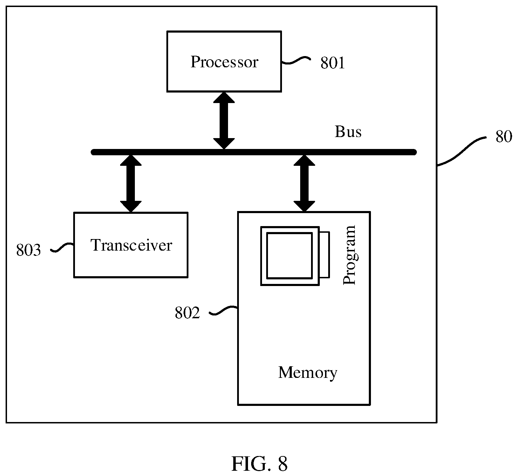

FIG. 8 is still another schematic diagram of a structure of an integrity measurement apparatus according to an embodiment of this application. Due to a difference in integration degree, the integrity measurement apparatus 80 may include one or more of the components shown in FIG. 8, and may be configured to perform the method or step related to the first measurement module 101 in the foregoing embodiment. As shown in FIG. 8, the integrity measurement apparatus 80 may include a processor 801, a memory 802, and a transceiver 803. The processor 801, the transceiver 803, the memory 802, and the like are connected by using a bus or in another manner. A specific connection medium between the components is not limited in this embodiment of this application. In an example, the integrity measurement apparatus 80 may be an entire device, to implement the integrity measurement method in the foregoing embodiment. In another example, the integrity measurement apparatus 80 may be a chip system or a processing system, and is applied to an entire device to control the entire device to implement the integrity measurement method in the foregoing embodiment. The chip system or the processing system may include a processor, and optionally, further include a computer-readable storage medium/memory.

In a specific implementation, the transceiver 803 may be configured to support communication between the first measurement module 101 and another module (such as the second measurement module 102 or the attestation module 103). For example, the transceiver 803 may be configured to perform the process of sending the measurement result information to the attestation module 103 in step S230. For another example, the transceiver 803 may be further configured to perform the process of sending the first measurement indication information to the second measurement module 102 in step 210.

The processor 801 is configured to control and manage an action of the first measurement module 101, and is configured to perform the processing performed by the first measurement module 101 in the foregoing embodiment. For example, the processor 801 may perform the process of performing integrity measurement on the second measurement module 102 in step 210. For another example, the processor 801 may be further configured to perform the step of determining the measurement result information based on the first measurement result and the second measurement result in step S230.

Optionally, the memory 803 stores a program, instructions, or data for executing technical solutions of this application. For example, the memory 803 may include an instruction sufficient to allow the integrity measurement apparatus 80 to perform the function of the first measurement module 101 in the foregoing embodiment.

Optionally, the processor 803 may further include a processing circuit and a communication interface circuit. The processing circuit may be configured to perform the step that is of determining the measurement result information and that is described in step S230 in the embodiment, or may alternatively be configured to perform the step that is of determining that the measurement trigger condition is met and that is in step 200. The communication interface circuit is configured to output information generated by the processing circuit, and may be further configured to input information received by the first measurement module or instructions in the memory into the processing circuit for processing.

Optionally, the memory 803 may be an internal memory located inside the processor, or may be an external memory that is outside the processor and that is coupled to the processor.

Still referring to FIG. 8, the integrity measurement apparatus 80 may be further configured to perform the method or step related to the attestation module 103 in the foregoing embodiment. Herein, for a description of a structure of the integrity measurement apparatus 80, refer to the foregoing description. Details are not described herein again. The transceiver 803 may be configured to support data transmission between the attestation module 103 and each of the first measurement module 101 or the second measurement module 102. For example, the transceiver 803 may be configured to perform the step that is described in step 240 and that is of receiving the measurement result information.

The processor 801 is configured to control and manage an action of the attestation module 103, and is configured to perform the processing performed by the attestation module 103 in the foregoing embodiment. For example, the processor 801 may be configured to perform the step that is in step S240 and that is of determining, based on the measurement result information, whether the to-be-measured object 104 passes integrity verification.

Optionally, the memory 802 stores a program, instructions, or data for executing the technical solutions of this application. For example, the memory 802 may include an instruction sufficient to allow the integrity measurement apparatus 80 to perform the function of the attestation module 103 in any one of the foregoing embodiments.

Optionally, the processor 802 may include a processing circuit and a communication interface circuit. The processing circuit may be configured to determine, based on the measurement result information, whether the to-be-measured object 104 passes integrity verification. The communication interface circuit is configured to output information generated by the processing circuit, and may be further configured to input information received by the attestation module 103 or instructions in the memory into the processing circuit for processing.

Optionally, the memory 802 may be an internal memory located inside the processor, or may be an external memory that is outside the processor and that is coupled to the processor.

Still referring to FIG. 8, the integrity measurement apparatus 80 may be further configured to perform the method or step related to the second measurement module 102 in the foregoing embodiment. Herein, for a description of a structure of the integrity measurement apparatus 80, refer to the foregoing description. Details are not described herein again. The transceiver 803 may be configured to support data transmission between the second measurement module 102 and each of the first measurement module 101 or the attestation module 103. For example, the transceiver 803 may be configured to perform the step that is described in step S210 and that is of receiving the first measurement result information, and may be further configured to perform the step that is described in step S220 and that is of sending the second measurement result to the first measurement module 101.

The processor 801 is configured to control and manage an action of the attestation module 103, and is configured to perform the processing performed by the attestation module 103 in the foregoing embodiment. For example, the processor 801 may be configured to perform the step that is in step S240 and that is of determining, based on the measurement result information, whether the to-be-measured object 104 passes integrity verification.

Optionally, the memory 802 stores a program, instructions, or data for executing the technical solutions of this application. For example, the memory 802 may include an instruction sufficient to allow the integrity measurement apparatus 80 to perform the function of the second measurement module 102 in any one of the foregoing embodiments.

Optionally, the processor 802 may include a processing circuit and a communication interface circuit. The processing circuit may be configured to a process of performing integrity measurement on the to-be-measured object 104. The communication interface circuit is configured to output information generated by the processing circuit, and may be further configured to input information received by the second measurement module 102 or instructions in the memory into the processing circuit for processing.

Optionally, the memory 802 may be an internal memory located inside the processor, or may be an external memory that is outside the processor and that is coupled to the processor.

Herein, it should be noted that, when one or more of the first measurement module 101, the second measurement module 102, the attestation module 103, and the to-be-measured object 104 are simultaneously implemented by the integrity measurement apparatus 80, the processor 801, the memory 802, and the transceiver 803 may simultaneously perform functions corresponding to one or more of the first measurement module 101, the second measurement module 102, the attestation module 103, and the to-be-measured object 104. For a specific implementation process, refer to the foregoing description. Details are not described herein again.

It may be understood that FIG. 8 shows only a simplified design of the integrity measurement apparatus 80. In actual application, the integrity measurement apparatus 80 may include any quantity of transceivers, processors, memories, and the like, and all possible implementations fall within the protection scope of the integrity measurement apparatus 80 of this application.

It should be noted that the processor 801 of the integrity measurement apparatus 80 may be a general-purpose processor, such as a general-purpose central processing unit, a network processor (network processor, NP for short), or a microprocessor, or may be an application-specific integrated circuit (application-specific integrated circuit, ASIC for short), or one or more integrated circuits configured to control execution of a program in the solutions of this application, or may be a digital signal processor (digital signal processor, DSP for short), a field programmable gate array (field-programmable gate array, FPGA for short) or another programmable logic device, discrete gate or transistor logic device, or discrete hardware component. Alternatively, the controller/processor may be a combination of processors implementing a computing function, for example, a combination of one or more microprocessors, and or a combination of the DSP and a microprocessor. The processor generally performs logical and arithmetic operations according to program instructions stored in the memory.

The related memory stores an operating system and another application program. Specifically, the program may include program code, and the program code includes computer operation instructions. More specifically, the memory may be a read-only memory (read-only memory, ROM for short), another type of static storage device that can store static information and instructions, a random access memory (random access memory, RAM for short), another type of dynamic storage device that can store information and instructions, a disk memory, or the like. The memory 802 may alternatively be a combination of the foregoing storage types. In addition, the memory may be located in the processor, may be located outside the processor, or may be distributed in a plurality of entities including a processor or a processing circuit. The memory may be specifically embodied in a computer program product. For example, the computer program product may include a computer-readable medium in a packaging material.

An embodiment of this application further provides a computer-readable medium. The computer-readable medium stores a computer program. When being executed by a computer, the computer program implements the method or step performed by the first measurement module 101, the second measurement module 102, or the attestation module 103 in the foregoing embodiment.

An embodiment of this application further provides a computer program product. When being executed by a computer, the computer program product implements the method or step performed by the first measurement module 101, the second measurement module 102, or the attestation module 103 in the foregoing embodiment.

An embodiment of this application further provides a chip or a chip system. The chip or the chip system includes a processor, configured to support the first measurement module 101, the second measurement module 102, the attestation module 103, and the to-be-measured object 104 in implementing the functions in the foregoing embodiment, for example, generating or processing the data and/or the information used in the foregoing method. In a possible design, the chip system may further include a memory, and the memory is configured to store necessary program instructions and data. When the processor runs the program instructions, an apparatus equipped with the chip or the chip system is enabled to implement the method in the foregoing embodiment. The chip system may include a chip, or may include a chip and another discrete component.

Method or algorithm steps described in combination with the content disclosed in this application may be implemented by hardware, or may be implemented by a processor by executing software instructions. The software instructions may include a corresponding software module. The software module may be stored in a RAM, a flash memory, a ROM, an EPROM, an EEPROM, a register, a hard disk, a removable hard disk, a CD-ROM, or a storage medium in any other form well-known in the art. For example, a storage medium is coupled to a processor, so that the processor can read information from the storage medium or write information into the storage medium. Certainly, the storage medium may be a component of the processor. The processor and the storage medium may be disposed in an ASIC. In addition, the ASIC may be located in user equipment. Certainly, the processor and the storage medium may exist in the user equipment as discrete components.

It should be understood that the terms "system" and "network" in embodiments of this application may be usually used interchangeably. The term "and/or" in embodiments of this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium. The communication medium includes any medium that facilitates transmission of a computer program from one place to another. The storage medium may be any available medium accessible to a general-purpose or a special-purpose computer.

In the foregoing specific implementations, the objectives, technical solutions, and beneficial effects of this application are further described in detail. It should be understood that the foregoing descriptions are merely specific implementations of this application, but are not intended to limit the protection scope of this application. The protection scope of this application is defined by the independent claims.

## Claims

1. An integrity measurement method, wherein the method comprises:
performing (S210), by a first measurement module (101), integrity measurement on a second measurement module (102) to obtain a first measurement result, wherein credibility of the first measurement module (101) is higher than credibility of the second measurement module (102);
receiving (S220), by the first measurement module (101), a second measurement result sent by the second measurement module (102), wherein the second measurement result is obtained by the second measurement module (102) performing integrity measurement on a to-be-measured object (104); and
sending (S230), by the first measurement module (101), measurement result information to an attestation module (103), wherein the measurement result information is determined based on the first measurement result and the second measurement result, and the attestation module (103) is configured to determine, based on the measurement result information, whether the to-be-measured object (104) passes integrity verification,
wherein the method further comprises:
receiving, by the attestation module (103), the measurement result information, **characterized in that** the measurement result information comprises the first measurement result and the second measurement result; and
if the attestation module (103) determines that the first measurement result is the same as a first baseline value corresponding to the second measurement module, and the second measurement result is the same as a second baseline value corresponding to the to-be-measured object, determining that the to-be-measured object passes integrity verification; and
if the attestation module (103) determines that the first measurement result is different from a first baseline value, or determines that the second measurement result is different from a second baseline value, determining that the to-be-measured object fails integrity verification.

2. The method according to claim 1, wherein the first measurement module is a preset trusted measurement root.

3. The method according to claim 1 or 2, wherein the first measurement module is a dynamic integrity measurement DIM trusted execution environment TEE module or a hard security module HSM, and the second measurement module is a DIM module.

4. The method according to claim 1 or 2, wherein the second measurement module comprises a first measurement submodule (1021) and a second measurement submodule (1022), the first measurement module is an HSM, the first measurement submodule (1021) is a DIM TEE module, and the second measurement submodule (1022) is a DIM module.

5. The method according to any one of claims 1 to 4, wherein the to-be-measured object comprises a memory code segment or a static file.

6. The method according to any one of claims 1 to 5, wherein before the performing, by a first measurement module, integrity measurement on a second measurement module to obtain a first measurement result, the method further comprises:
determining (S200), by the first measurement module, that a preset measurement trigger condition is satisfied, wherein the measurement trigger condition is that a preset measurement period arrives, the measurement trigger condition is that a preset system exception event occurs, or the measurement trigger condition is that a measurement trigger instruction from a user is received.

7. The method according to claim 6, wherein when the measurement trigger condition is that a preset system exception event occurs, the determining, by the first measurement module, that a preset trigger condition is satisfied comprises:
if the first measurement module receives a system exception message sent by an intrusion detection system IDS, determining that a preset trigger condition is satisfied, wherein the system exception message is sent by the IDS when the IDS detects that the system exception event occurs.

8. An integrity measurement apparatus (100), wherein the integrity measurement apparatus (100) comprises a first measurement module (101) and an attestation module (103), wherein
the first measurement module (101) is configured to perform integrity measurement on a second measurement module (102) to obtain a first measurement result, wherein credibility of the first measurement module (101) is higher than credibility of the second measurement module (102);
the first measurement module (101) is further configured to receive a second measurement result sent by the second measurement module (102), wherein the second measurement result is obtained by the second measurement module (102) performing integrity measurement on a to-be-measured object (104);
the first measurement module (101) is further configured to determine measurement result information based on the first measurement result and the second measurement result; and
the first measurement module (101) is further configured to send the measurement result information to the attestation module (103), wherein the attestation module (103) is configured to determine, based on the measurement result information, whether the to-be-measured object passes integrity verification,
wherein the attestation module (103) is configured to receive the measurement result information, **characterized in that** the measurement result information comprises the first measurement result and the second measurement result; and
the attestation module (103) is further configured to: if the attestation module (103) determines that the first measurement result is the same as a first baseline value corresponding to the second measurement module, and the second measurement result is the same as a second baseline value corresponding to the to-be-measured object, determine that the to-be-measured object (104) passes integrity verification; and
if the attestation module (103) determines that the first measurement result is different from a first baseline value, or determines that the second measurement result is different from a second baseline value, determine that the to-be-measured object (104) fails integrity verification.

9. The integrity measurement apparatus according to claim 8, wherein the integrity measurement apparatus further comprises at least one of the second measurement module, and the to-be-measured object.

10. The integrity measurement apparatus according to claim 8 or 9, wherein the first measurement module is a trusted measurement root.

11. The integrity measurement apparatus according to any one of claims 8 to 10, wherein the first measurement module is a DIM TEE or an HSM, and the second measurement module is a DIM module.

12. The integrity measurement apparatus according to any one of claims 8 to 10, wherein the second measurement module comprises a first measurement submodule (1021) and a second measurement submodule (1022), the first measurement module is an HSM, the first measurement submodule (1021) is a DIM TEE module, and the second measurement submodule (1022) is a DIM module.

13. The integrity measurement apparatus according to any one of claims 8 to 12, wherein the integrity measurement apparatus is a chip or a chip system.

14. An integrity measurement apparatus (80), wherein the integrity measurement apparatus (80) comprises a processor (801) and a memory (802), the memory (802) stores code, and the processor (801) runs the code to implement the integrity measurement method according to any one of claims 1 to 7.

15. A computer-readable storage medium, wherein the readable storage medium stores program instructions; and when the program instructions are run, the integrity measurement method according to any one of claims 1 to 7 is performed.

## Patentansprüche

1. Integritätsmessverfahren, wobei das Verfahren Folgendes umfasst:
Durchführen (S210) einer Integritätsmessung durch ein erstes Messmodul (101) an einem zweiten Messmodul (102), um ein erstes Messergebnis zu erhalten, wobei die Glaubwürdigkeit des ersten Messmoduls (101) höher als die Glaubwürdigkeit des zweiten Messmoduls (102) ist;
Empfangen (S220) eines vom zweiten Messmodul (102) gesendeten zweiten Messergebnisses durch das erste Messmodul (101), wobei das zweite Messergebnis durch das zweite Messmodul (102) erhalten wird, das eine Integritätsmessung an einem zu messenden Objekt (104) durchführt; und
Senden (S230) von Messergebnisinformationen durch das erste Messmodul (101) an ein Bestätigungsmodul (103), wobei die Messergebnisinformationen basierend auf dem ersten Messergebnis und dem zweiten Messergebnis bestimmt werden und das Bestätigungsmodul (103) dazu ausgelegt ist, basierend auf den Messergebnisinformation zu bestimmen, ob das zu messende Objekt (104) die Integritätsprüfung besteht,
wobei das Verfahren ferner Folgendes umfasst:
Empfangen der Messergebnisinformationen durch das Bestätigungsmodul (103), **dadurch gekennzeichnet, dass** die Messergebnisinformationen das erste Messergebnis und das zweite Messergebnis umfassen; und,
wenn das Bestätigungsmodul (103) bestimmt, dass das erste Messergebnis gleich einem ersten Basislinienwert ist, der dem zweiten Messmodul entspricht, und das zweite Messergebnis gleich einem zweiten Basislinienwert ist, der dem zu messenden Objekt entspricht, Bestimmen, dass das zu messende Objekt die Integritätsprüfung besteht; und,
wenn das Bestätigungsmodul (103) bestimmt, dass sich das erste Messergebnis von einem ersten Basislinienwert unterscheidet, oder bestimmt, dass sich das zweite Messergebnis von einem zweiten Basislinienwert unterscheidet, Bestimmen, dass das zu messende Objekt die Integritätsprüfung nicht besteht.

2. Verfahren nach Anspruch 1, wobei das erste Messmodul eine vertrauenswürdige Messwurzel ist.

3. Verfahren nach Anspruch 1 oder 2, wobei das erste Messmodul ein Modul einer vertrauenswürdigen Ausführungsumgebung, TEE, für dynamische Integritätsmessung, DIM, oder ein Hardwaresicherheitsmodul, HSM, ist und das zweite Messmodul ein DIM-Modul ist.

4. Verfahren nach Anspruch 1 oder 2, wobei das zweite Messmodul ein erstes Messsubmodul (1021) und ein zweites Messsubmodul (1022) umfasst, das erste Messmodul ein HSM ist, das erste Messsubmodul (1021) ein DIM-TEE-Modul ist und das zweite Messsubmodul (1022) ein DIM-Modul ist.

5. Verfahren nach einem der Ansprüche 1 bis 4, wobei das zu messende Objekt ein Speichercodesegment oder eine statische Datei umfasst.

6. Verfahren nach einem der Ansprüche 1 bis 5, wobei das Verfahren vor dem Durchführen der Integritätsmessung durch ein erstes Messmodul an einem zweiten Messmodul zum Erhalten eines ersten Messergebnisses ferner Folgendes umfasst:
Bestimmen (S200) durch das erste Messmodul, dass eine voreingestellte Messauslösebedingung erfüllt ist, wobei die Messauslösebedingung darin besteht, dass ein voreingestellter Messzeitraum eintritt, die Messauslösebedingung darin besteht, dass ein voreingestelltes Systemausnahmeereignis eintritt, oder die Messauslösebedingung darin besteht, dass eine Messungsauslöseanweisung von einem Benutzer empfangen wird.

7. Verfahren nach Anspruch 6, wobei, wenn die Messauslösebedingung darin besteht, dass ein voreingestelltes Systemausnahmeereignis eintritt, das Bestimmen durch das erste Messmodul, dass eine voreingestellte Auslösebedingung erfüllt ist, Folgendes umfasst:
wenn das erste Messmodul eine Systemausnahmenachricht empfängt, die von einem Angriffserkennungssystem, IDS, gesendet wird, Bestimmen, dass eine voreingestellte Auslösebedingung erfüllt ist, wobei die Systemausnahmenachricht vom IDS gesendet wird, wenn das IDS erkennt, dass das Systemausnahmeereignis eintritt.

8. Integritätsmessvorrichtung (100), wobei die Integritätsmessvorrichtung (100) ein erstes Messmodul (10) und ein zweites Messmodul (103) umfasst, wobei das erste Messmodul (101) zum Durchführen einer Integritätsmessung an einem zweiten Messmodul (102) ausgelegt ist, um ein erstes Messergebnis zu erhalten, wobei die Glaubwürdigkeit des ersten Messmoduls (101) höher als die Glaubwürdigkeit des zweiten Messmoduls (102) ist;
das erste Messmodul (101) ferner zum Empfangen eines zweiten Messergebnisses ausgelegt ist, das vom zweiten Messmodul (102) gesendet wird, wobei das zweite Messergebnis durch das zweite Messmodul (102) erhalten wird, das eine Integritätsmessung an einem zu messenden Objekt (104) durchführt;
das erste Messmodul (101) ferner zum Bestimmen von Messergebnisinformationen basierend auf dem ersten Messergebnis und dem zweiten Messergebnis ausgelegt ist; und
das erste Messmodul (101) ferner zum Senden der Messergebnisinformationen an das Bestätigungsmodul (103) ausgelegt ist, wobei das Bestätigungsmodul (103) dazu ausgelegt ist, basierend auf den Messergebnisinformationen zu bestimmen, ob das zu messende Objekt die Integritätsprüfung besteht,
wobei das Bestätigungsmodul (103) zum Empfangen der Messergebnisinformationen ausgelegt ist, **dadurch gekennzeichnet, dass** die Messergebnisinformationen das erste Messergebnis und das zweite Messergebnis umfassen; und
das Bestätigungsmodul (103) ferner ausgelegt ist zum: wenn das Bestätigungsmodul (103) bestimmt, dass das erste Messergebnis gleich einem ersten Basislinienwert ist, der dem zweiten Messmodul entspricht, und das zweite Messergebnis gleich einem zweiten Basislinienwert ist, der dem zu messenden Objekt entspricht, Bestimmen, dass das zu messende Objekt (104) die Integritätsprüfung besteht; und,
wenn das Bestätigungsmodul (103) bestimmt, dass sich das erste Messergebnis von einem ersten Basislinienwert unterscheidet, oder bestimmt, dass sich das zweite Messergebnis von einem zweiten Basislinienwert unterscheidet, Bestimmen, dass das zu messende Objekt (104) die Integritätsprüfung nicht besteht.

9. Integritätsmessvorrichtung nach Anspruch 8, wobei die Integritätsmessvorrichtung ferner mindestens eines von dem zweiten Messmodul und dem zu messenden Objekt umfasst.

10. Integritätsmessvorrichtung nach Anspruch 8 oder 9, wobei das erste Messmodul eine vertrauenswürdige Messwurzel ist.

11. Integritätsmessvorrichtung nach einem der Ansprüche 8 bis 10, wobei das erste Messmodul ein DIM-TEE oder ein HSM ist und das zweite Messmodul ein DIM-Modul ist.

12. Integritätsmessvorrichtung nach einem der Ansprüche 8 bis 10, wobei das zweite Messmodul ein erstes Messsubmodul (1021) und ein zweites Messsubmodul (1022) umfasst, das erste Messmodul ein HSM, ist, das erste Messsubmodul (1021) ein DIM-TEE-Modul ist und das zweite Messsubmodul (1022) ein DIM-Modul ist.

13. Integritätsmessvorrichtung nach einem der Ansprüche 8 bis 12, wobei die Integritätsmessvorrichtung ein Chip oder Chipsystem ist.

14. Integritätsmessvorrichtung (80), wobei die Integritätsmessvorrichtung (80) einen Prozessor (801) und einen Speicher (802) umfasst, der Speicher (802) Code speichert und der Prozessor (801) den Code ausführt, um das Integritätsmessverfahren nach einem der Ansprüche 1 bis 7 zu implementieren.

15. Computerlesbares Speichermedium, wobei das computerlesbare Speichermedium Programmanweisungen speichert und, wenn die Programmanweisungen ausgeführt werden, das Integritätsmessverfahren nach einem der Ansprüche 1 bis 7 durchgeführt wird.

## Revendications

1. Procédé de mesure d'intégrité, dans lequel le procédé comprend :
l'exécution (S210), par un premier module de mesure (101), d'une mesure d'intégrité sur un second module de mesure (102) pour obtenir un premier résultat de mesure, dans lequel la crédibilité du premier module de mesure (101) est supérieure à la crédibilité du second module de mesure (102) ;
la réception (S220), par le premier module de mesure (101), d'un second résultat de mesure envoyé par le second module de mesure (102), dans lequel le second résultat de mesure est obtenu par le second module de mesure (102) exécutant une mesure d'intégrité sur un objet à mesurer (104) ; et
l'envoi (S230), par le premier module de mesure (101), d'informations de résultat de mesure à un module d'attestation (103), dans lequel les informations de résultat de mesure sont déterminées sur la base du premier résultat de mesure et du second résultat de mesure, et le module d'attestation (103) est configuré pour déterminer, sur la base des informations de résultat de mesure, si l'objet à mesurer (104) réussit ou non la vérification d'intégrité,
dans lequel le procédé comprend en outre :
la réception, par le module d'attestation (103), des informations de résultat de mesure, **caractérisé en ce que** les informations de résultat de mesure comprennent le premier résultat de mesure et le second résultat de mesure ; et
si le module d'attestation (103) détermine que le premier résultat de mesure est identique à une première valeur de base correspondant au second module de mesure, et que le second résultat de mesure est identique à une seconde valeur de base correspondant à l'objet à mesurer, la détermination que l'objet à mesurer réussit la vérification d'intégrité ; et
si le module d'attestation (103) détermine que le premier résultat de mesure est différent d'une première valeur de base, ou détermine que le second résultat de mesure est différent d'une seconde valeur de base, la détermination que l'objet à mesurer échoue à la vérification d'intégrité.

2. Procédé selon la revendication 1, dans lequel le premier module de mesure est une racine de mesure de confiance prédéfinie.

3. Procédé selon la revendication 1 ou 2, dans lequel le premier module de mesure est un module d'environnement d'exécution de confiance TEE de mesure d'intégrité dynamique DIM ou un module de sécurité matériel HSM, et le second module de mesure est un module DIM.

4. Procédé selon la revendication 1 ou 2, dans lequel le second module de mesure comprend un premier sous-module de mesure (1021) et un second sous-module de mesure (1022), le premier module de mesure est un HSM, le premier sous-module de mesure (1021) est un module TEE DIM, et le second sous-module de mesure (1022) est un module DIM.

5. Procédé selon l'une quelconque des revendications 1 à 4, dans lequel l'objet à mesurer comprend un segment de code de mémoire ou un fichier statique.

6. Procédé selon l'une quelconque des revendications 1 à 5, dans lequel avant l'exécution, par un premier module de mesure, d'une mesure d'intégrité sur un second module de mesure pour obtenir un premier résultat de mesure, le procédé comprend en outre :
la détermination (S200), par le premier module de mesure, qu'une condition de déclenchement de mesure prédéfinie est satisfaite, dans lequel la condition de déclenchement de mesure consiste en ce qu'une période de mesure prédéfinie arrive, la condition de déclenchement de mesure consiste en ce qu'un évènement d'exception système prédéfini se produit, ou la condition de déclenchement de mesure consiste en ce qu'une instruction de déclenchement de mesure provenant d'un utilisateur est reçue.

7. Procédé selon la revendication 6, dans lequel lorsque la condition de déclenchement de mesure consiste en ce qu'un évènement d'exception système prédéfini se produit, la détermination, par le premier module de mesure, qu'une condition de déclenchement prédéfinie est satisfaite comprend :
si le premier module de mesure reçoit un message d'exception système envoyé par un système de détection d'intrusion IDS, la détermination qu'une condition de déclenchement prédéfinie est satisfaite, dans lequel le message d'exception système est envoyé par l'IDS lorsque l'IDS détecte que l'évènement d'exception système se produit.

8. Appareil de mesure d'intégrité (100), dans lequel l'appareil de mesure d'intégrité (100) comprend un premier module de mesure (101) et un module d'attestation (103), dans lequel
le premier module de mesure (101) est configuré pour exécuter une mesure d'intégrité sur un second module de mesure (102) pour obtenir un premier résultat de mesure, dans lequel la crédibilité du premier module de mesure (101) est supérieure à la crédibilité du second module de mesure (102) ;
le premier module de mesure (101) est en outre configuré pour recevoir un second résultat de mesure envoyé par le second module de mesure (102), dans lequel le second résultat de mesure est obtenu par le second module de mesure (102) exécutant une mesure d'intégrité sur un objet à mesurer (104) ;
le premier module de mesure (101) est en outre configuré pour déterminer des informations de résultat de mesure sur la base du premier résultat de mesure et du second résultat de mesure ; et
le premier module de mesure (101) est en outre configuré pour envoyer les informations de résultat de mesure au module d'attestation (103), dans lequel le module d'attestation (103) est configuré pour déterminer, sur la base des informations de résultat de mesure, si l'objet à mesurer réussit la vérification d'intégrité,
dans lequel le module d'attestation (103) est configuré pour recevoir les informations de résultat de mesure, **caractérisé en ce que** les informations de résultat de mesure comprennent le premier résultat de mesure et le second résultat de mesure ; et
le module d'attestation (103) est en outre configuré pour : si le module d'attestation (103) détermine que le premier résultat de mesure est identique à une première valeur de base correspondant au second module de mesure, et que le second résultat de mesure est identique à une seconde valeur de base correspondant à l'objet à mesurer, déterminer que l'objet à mesurer (104) réussit la vérification d'intégrité ; et
si le module d'attestation (103) détermine que le premier résultat de mesure est différent d'une première valeur de base, ou détermine que le second résultat de mesure est différent d'une seconde valeur de base, déterminer que l'objet à mesurer (104) échoue à la vérification d'intégrité.

9. Appareil de mesure d'intégrité selon la revendication 8, dans lequel l'appareil de mesure d'intégrité comprend en outre au moins l'un du second module de mesure et de l'objet à mesurer.

10. Appareil de mesure d'intégrité selon la revendication 8 ou 9, dans lequel le premier module de mesure est une racine de mesure de confiance.

11. Appareil de mesure d'intégrité selon l'une quelconque des revendications 8 à 10, dans lequel le premier module de mesure est un TEE DIM ou un HSM, et le second module de mesure est un module DIM.

12. Appareil de mesure d'intégrité selon l'une quelconque des revendications 8 à 10, dans lequel le second module de mesure comprend un premier sous-module de mesure (1021) et un second sous-module de mesure (1022), le premier module de mesure est un HSM, le premier sous-module de mesure (1021) est un module TEE DIM, et le second sous-module de mesure (1022) est un module DIM.

13. Appareil de mesure d'intégrité selon l'une quelconque des revendications 8 à 12, dans lequel l'appareil de mesure d'intégrité est une puce ou un système sur puce.

14. Appareil de mesure d'intégrité (80), dans lequel l'appareil de mesure d'intégrité (80) comprend un processeur (801) et une mémoire (802), la mémoire (802) stocke du code, et le processeur (801) exécute le code pour mettre en œuvre le procédé de mesure d'intégrité selon l'une quelconque des revendications 1 à 7.

15. Support de stockage lisible par ordinateur, dans lequel le support de stockage lisible stocke des instructions de programme ; et lorsque les instructions de programme sont exécutées, le procédé de mesure d'intégrité selon l'une quelconque des revendications 1 à 7 est exécuté.
